# FASCICULE DE BREVET EUROPEEN

(11) **EP 3 980 258 B1**
(45) Date de publication et mention de la délivrance du brevet: **17.01.2024**
(21) Numéro de dépôt: 20728781.4
(22) Date de dépôt: 02.06.2020
(51) Int. Cl.: B29D 30/06

(54) **PROCEDE DE CUISSON DE PNEUMATIQUE UTILISANT UNE MEMBRANE DE CUISSON COMPRENANT TROIS ZONES DE DRAINAGE AGENCEES PAR ORDRE CROISSANT DE PROFONDEUR**
PNEUMATISCHES HÄRTUNGSVERFAHREN UNTER VERWENDUNG EINER HÄRTUNGSMEMBRAN MIT DREI IN ZUNEHMENDER TIEFE ANGEORDNETEN ABFLUSSBEREICHEN
PNEUMATIC CURING METHOD USING A CURING MEMBRANE COMPRISING THREE DRAINAGE AREAS ARRANGED IN INCREASING ORDER OF DEPTH

(30) Priorité: 06.06.2019 FR 1906013
(43) Date de publication de la demande: 13.04.2022
(73) Titulaire: COMPAGNIE GENERALE DES ETABLISSEMENTS MICHELIN, 63000 Clermont-Ferrand (FR)
(72) Inventeur: PIALOT, Frédéric, 63040 Clermont-Ferrand Cedex 9 (FR); MERINO LOPEZ, José, 63040 Clermont-Ferrand Cedex 9 (FR); FAUGERAS, Alain, 63040 Clermont-Ferrand Cedex 9 (FR)
(74) Mandataire: M.F.P. Michelin
(86) Numéro de dépôt international: PCT/EP2020/065215
(87) Numéro de publication internationale: WO 2020/245115

(56) Documents cités:
- WO-A1-2009/078317
- CN-A- 108 381 832
- JP-A- 2008 012 751

## Description

La présente invention concerne le domaine des procédés de fabrication de pneumatiques, et plus particulièrement le domaine des procédés de cuisson de pneumatiques.

Il est connu d'obtenir un pneumatique en réalisant tout d'abord une ébauche de pneumatique, de forme toroïdale, puis en pressant ladite ébauche de pneumatique contre les parois d'un moule de cuisson au moyen d'une membrane de cuisson gonflable, ce qui permet de conférer au pneumatique sa forme définitive et de vulcaniser ledit pneumatique.

L'ébauche de pneumatique est généralement obtenue en posant et enroulant sur un tambour une pluralité de composants, parmi lesquels on trouve usuellement un film d'étanchéité à l'air, dit « gomme intérieure » (« inner liner »), une nappe carcasse, des nappes de renfort à base de caoutchouc renforcées par des fils de renfort, et une paire de tringles annulaires destinée à renforcer une zone de bourrelet qui permet la fixation du pneumatique sur une jante.

Pour mouler le pneumatique, on déploie une membrane de cuisson à l'encontre de la surface intérieure de l'ébauche de pneumatique de manière à presser la surface extérieure de ladite ébauche de pneumatique contre les parois du moule, elles-mêmes agencées selon la forme définitive du pneumatique et pourvues de garnitures qui correspondent à l'empreinte en négatif du dessin de la bande de roulement.

Avantageusement, le gonflage de la membrane de cuisson est opéré au moyen d'un fluide caloporteur sous pression, qui permet non seulement d'exercer la pression qui est nécessaire à la mise en forme du pneumatique, mais également d'apporter de la chaleur qui contribue à la vulcanisation dudit pneumatique ainsi mis en forme.

Bien entendu, il est nécessaire, lors du déploiement de la membrane de cuisson, d'évacuer l'air qui se trouve initialement emprisonné entre ladite membrane de cuisson et la surface intérieure de l'ébauche de pneumatique, et ce afin d'éviter l'apparition de poches d'air susceptibles d'engendrer des défauts sur la surface intérieure du pneumatique, défauts qui peuvent nuire à l'aspect, aux performances, voire à la cohésion dudit pneumatique.

A ce titre, il est connu de prévoir sur la surface de la membrane de cuisson une structure de drainage comprenant des canaux qui forment des chemins d'évacuation d'air, permettant d'évacuer l'air jusqu'à des évents prévus à cet effet dans le moule.

Cependant, l'homme du métier est alors confronté à des besoins contradictoires.

En effet, pour favoriser un drainage et une évacuation efficaces de l'air, on serait tenté d'une part de couvrir de canaux la plus grande surface possible sur la membrane de cuisson, en prévoyant une densité surfacique desdits canaux qui soit la plus élevée possible, et ce afin de ne pas laisser sur la surface intérieure de l'ébauche de pneumatique de zones qui ne seraient pas drainées, et d'autre part de prévoir une profondeur desdits canaux qui soit la plus importante possible, de sorte à disposer d'une forte capacité d'écoulement d'air à travers la section des canaux.

Cependant, lorsque la membrane de cuisson est plaquée contre la surface intérieure de l'ébauche de pneumatique, on observe que le film d'étanchéité, ou « gomme intérieure », qui tapisse ladite ébauche de pneumatique, pénètre dans les canaux et épouse sensiblement la forme desdits canaux. Il en résulte une augmentation de la surface développée dudit film d'étanchéité, et donc, par un phénomène de déformation plastique de type striction, une réduction de l'épaisseur dudit film d'étanchéité. Afin d'éviter un affaiblissement du film d'étanchéité, et ainsi de garantir l'étanchéité et la longévité du pneumatique, il est donc nécessaire de limiter les irrégularités de surface de la membrane de cuisson.

Les objets assignés à l'invention visent par conséquent à remédier aux inconvénients susmentionnés et à proposer un nouveau procédé de cuisson, ainsi qu'une nouvelle membrane de cuisson correspondante, qui garantisse à la fois une évacuation d'air efficace lors du moulage et une qualité élevée et reproductible du pneumatique obtenu.

Le document de brevet WO 2009/078317 A1 divulgue les caractéristiques du préambule de la revendication indépendante 1.

En particulier, l'invention se propose de restreindre, autant que possible, la profondeur des canaux de la structure de drainage, de sorte à limiter les effets de striction de la gomme intérieure.

Les objets assignés à l'invention sont atteints au moyen d'un procédé de cuisson d'un pneumatique au cours duquel on déploie une membrane de cuisson à l'encontre d'une ébauche de pneumatique afin d'amener une surface de contact de ladite membrane de cuisson en appui contre une surface intérieure de ladite ébauche de pneumatique et de presser ainsi une surface extérieure de ladite ébauche de pneumatique contre les parois d'un moule de cuisson de manière à obtenir un pneumatique qui présente une zone sommet formant une bande de roulement annulaire autour d'un axe central Z, et, de chaque côté d'un plan équatorial normal audit axe central Z, une zone de bourrelet permettant de fixer ledit pneumatique sur une jante, et une zone de flanc qui relie la zone sommet à la zone de bourrelet, procédé selon lequel la surface de contact de la membrane de cuisson est pourvue d'une structure de drainage qui comprend des chemins d'évacuation d'air creusés sur la surface de contact selon une profondeur égale ou supérieure à 0,05 mm, dits « canaux », ledit procédé étant caractérisé en ce que ladite structure de drainage se subdivise, au moins d'un côté du plan équatorial, en au moins trois zones de drainage, dont une première zone de drainage qui correspond à une première portion annulaire de la surface de contact, centrée sur l'axe central, selon laquelle ladite surface de contact vient épouser la zone sommet, une seconde zone de drainage qui correspond à une seconde portion annulaire de la surface de contact, centrée sur l'axe central, selon laquelle ladite surface de contact vient épouser la zone de flanc, et dont les canaux communiquent avec les canaux de la première zone de drainage, et une troisième zone de drainage qui correspond à une troisième portion annulaire de la surface de contact, centrée sur l'axe central, selon laquelle ladite surface de contact vient épouser la zone de bourrelet, et dont les canaux communiquent avec les canaux de la seconde zone de drainage, et en ce que la profondeur moyenne des canaux de la troisième zone de drainage, qui est égale au quotient du volume occupé par les canaux présents dans ladite zone de drainage par la superficie couverte par ces mêmes canaux sur ladite zone de drainage, est strictement supérieure à la profondeur moyenne des canaux de la seconde zone de drainage, ladite profondeur moyenne des canaux de la seconde zone de drainage étant elle-même strictement supérieure à la profondeur moyenne des canaux de la première zone de drainage.

Avantageusement, l'invention permet de différencier la structure de drainage en fonction de la zone du pneumatique avec laquelle ladite structure de drainage coopère, et de conférer aux canaux une profondeur qui va globalement en augmentant progressivement au fil des zones de drainage, et donc depuis la zone sommet jusqu'à la zone de bourrelet du pneumatique, de sorte que l'on affecte à chaque région drainée de la surface intérieure de l'ébauche de pneumatique la quantité juste nécessaire et suffisante de canaux de drainage, qui permet de réaliser une évacuation efficace et progressive de l'air tout en minimisant et homogénéisant les déformations et les variations d'épaisseur correspondantes de la gomme intérieure.

En particulier, la subdivision, par tranches de latitude successives, des zones de drainage, qui s'étendent en bandes annulaires autour de l'axe central, entre des lignes fictives dites « parallèles » qui sont parallèles au plan dit « plan équatorial » du pneumatique qui est normal audit axe central, et qui se confond avec le plan équatorial de la membrane de cuisson lorsque celle-ci est à l'état déployée, permet d'adapter la capacité de drainage de chacune desdites zones de drainage d'une part au volume d'air à évacuer dans chaque zone du pneumatique, et d'autre part à l'ordre dans lequel s'opèrent successivement dans le temps, au cours du déploiement de la membrane de cuisson, la venue au contact de chaque zone de drainage contre la zone du pneumatique qui lui est affectée.

En effet, compte-tenu de la géométrie toroïdale du pneumatique, on observe que le contact entre la membrane de cuisson et l'ébauche de pneumatique s'effectue d'abord dans la zone sommet et les zones de bourrelet, puis ensuite dans la zone de flanc, pour finir dans le creux de ladite zone de flanc du pneumatique, qui correspond sensiblement à l'épaule, c'est-à-dire à la partie concave de la zone de flanc qui assure la transition entre la zone de flanc et la zone sommet.

La structure de drainage de la membrane de cuisson permet donc tout d'abord, dans une première phase de déploiement, d'appliquer contre la zone sommet du pneumatique la première zone de drainage présentant une profondeur moyenne de canaux relativement faible. Ceci permet d'évacuer l'air du sommet vers les épaules et les flancs tout en n'engendrant qu'une très faible pénétration de la gomme intérieure dans les canaux de ladite première zone de drainage, du fait que cette pénétration dépend directement de la profondeur moyenne des canaux de la première zone de drainage. De la sorte, le moulage ne provoque qu'une faible réduction, de surcroît relativement homogène, de l'épaisseur de la gomme intérieure dans ladite zone sommet. La résistance mécanique et l'imperméabilité à l'air de ladite gomme intérieure sont ainsi préservées.

Dans le même temps, au cours de cette première phase, la troisième zone de drainage, qui vient au contact des zones de bourrelet mais qui présente des canaux en moyenne plus profonds que ceux de la première zone de drainage, ménage, le long des zones de bourrelet, une issue permanente vers les évents du moule, pour l'air qui est présent dans les zones de flancs (que cet air ait été initialement présent dans lesdites zones de flanc ou qu'il provienne de la zone sommet dont il aura été expulsé par la membrane).

Cette même structure de drainage propre à l'invention permet ensuite, dans une seconde phase de déploiement, d'appliquer la seconde zone de drainage contre les zones de flanc, progressivement jusqu'à terminer par le fond de la partie creuse desdites zones de flanc, à proximité des épaules.

Pendant ce temps, au cours de ladite seconde phase, les canaux de la troisième zone de drainage, du fait de leur profondeur moyenne supérieure à celle des canaux des premières et seconde zones de drainage, maintiennent un chemin d'écoulement ouvert le long des zones de bourrelet, jusqu'aux évents du moule, ce qui permet d'évacuer l'air prisonnier des zones de flanc.

Ici encore, du fait de la profondeur relativement modeste des canaux de la seconde zone de drainage, l'application de ladite seconde zone de drainage contre la surface intérieure du pneumatique au niveau des zones de flanc n'engendre aucune déformation dommageable, et notamment aucune perte d'épaisseur dommageable, de la gomme intérieure dans les zones de flanc.

La structure de drainage multizones de la membrane de cuisson selon l'invention, et plus préférentiellement la structure de drainage tri-zones en ceci que ladite structure de drainage comprend de préférence trois types de zones de drainage distinctes, permet donc d'assurer une évacuation progressive et totale de l'air vers les évents du moule, successivement depuis la zone sommet puis depuis les zones de flanc, et via les zones de bourrelet, en optimisant, dans l'espace comme dans le temps, le volume de canaux de drainage qui est affecté à chaque instant considéré, lors du déploiement de la membrane de cuisson, à chaque zone respective du pneumatique, et ce tout en ne provoquant aucun dommage à la surface intérieure du pneumatique, et plus particulièrement aucun dommage à la gomme intérieure.

En outre, du fait que les canaux creusés dans les première et seconde zones de drainage présentent des profondeurs qui sont relativement faibles par rapport à l'épaisseur de la membrane de cuisson, lesdits canaux ne fragilisent par ladite membrane de cuisson, et ce même dans les zones où ladite membrane de cuisson est fortement sollicitée et soumise à ses plus fortes extensions élastiques lors du déploiement. De la sorte, on peut garantir la longévité de ladite membrane de cuisson, qui conserve son intégrité durant un grand nombre de cycles de moulage, sans se fissurer, se fragmenter ni se déchirer.

Par ailleurs, la structure de drainage selon l'invention peut avantageusement être combinée à un revêtement anti-adhésif, intégré à la surface de contact de la membrane de cuisson et destiné à faciliter la séparation du pneumatique et de la membrane de cuisson après moulage ; une telle combinaison permet d'assurer aussi bien l'évacuation de l'air pendant le moulage que le décollement facile de la membrane après moulage, et ce y compris lorsque l'on renonce à employer un badigeon, c'est-à-dire une substance liquide additionnelle destinée à faciliter le démoulage et que l'on pulvérise usuellement dans l'ébauche de pneumatique avant le moulage.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

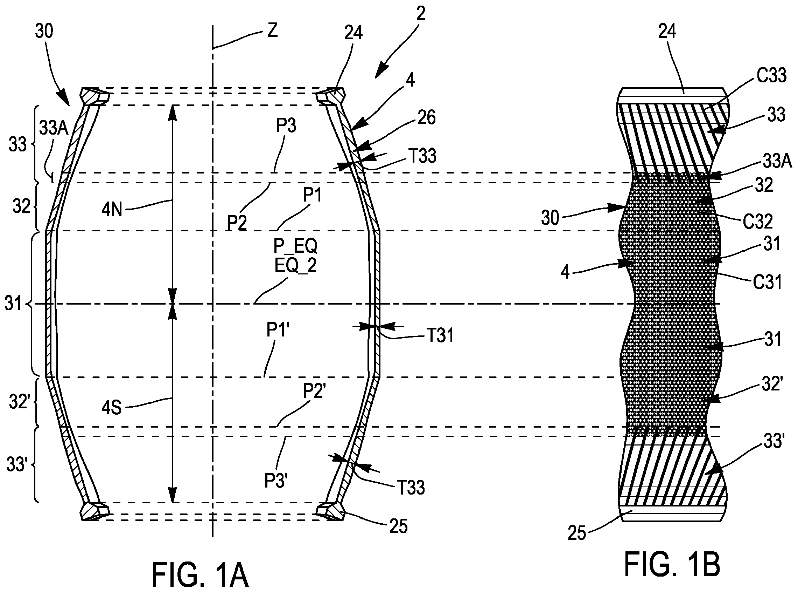

La figure 1A illustre, selon une vue schématique de face, un exemple de membrane de cuisson selon l'invention, présentant au repos une forme de révolution qui est générée autour de l'axe central par une section de base qui est détaillée sur cette même figure.
La figure 1B illustre, selon une vue de détail en projection, une portion de la surface de contact de la membrane de cuisson de la figure 1, faisant apparaître la répartition en latitude, d'un talon à l'autre de la membrane, en passant par la ligne équatoriale de celle-ci, des première, seconde et troisième zones de drainage annulaires.

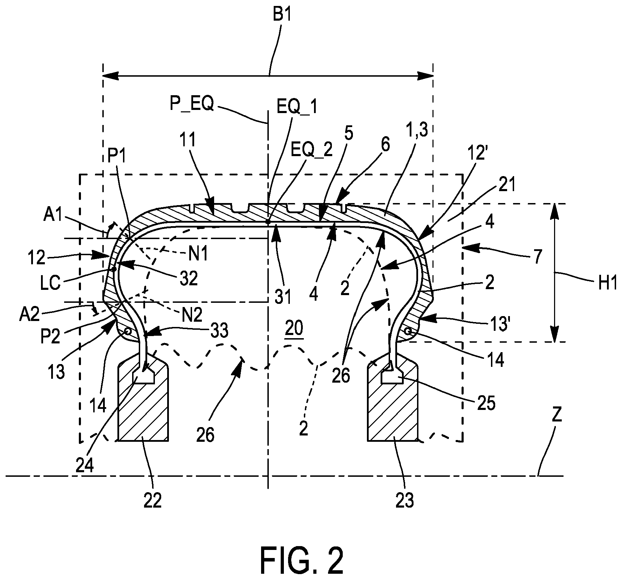

La figure 2 est une vue schématique du déploiement progressif d'une membrane selon l'invention à l'encontre des zones de bourrelet, de sommet et de flanc d'un pneumatique, en coupe dans un plan contenant l'axe central du pneumatique et de la membrane.

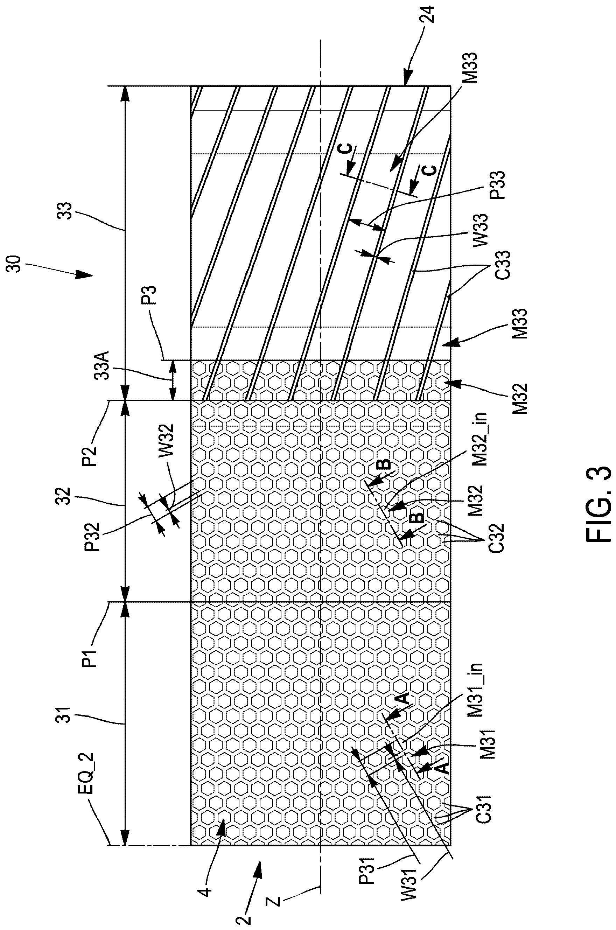

La figure 3 est une vue de détail des première, seconde et troisième zones de drainage de la figure 1B, faisant apparaître un agencement préféré de motifs de drainage associés chacun à l'une desdites zones de drainage.

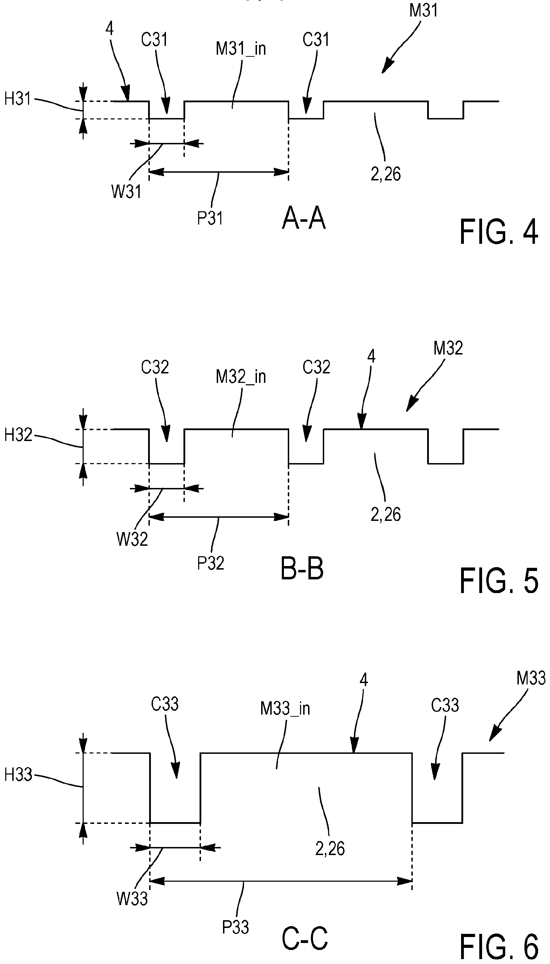

La figure 4 est une vue de détail en coupe de la membrane de cuisson des figures 1A, 1B et 3 dans la première zone de drainage, selon un plan de coupe perpendiculaire à la direction longitudinale des canaux, de sorte à faire apparaître la profondeur desdits canaux creusés dans l'épaisseur de ladite membrane de cuisson.
La figure 5 est une vue de détail en coupe de la membrane de cuisson des figures 1A, 1B et 3 dans la seconde zone de drainage, selon un plan de coupe perpendiculaire à la direction longitudinale des canaux, de sorte à faire apparaître la profondeur desdits canaux creusés dans l'épaisseur de ladite membrane de cuisson.
La figure 6 est une vue de détail en coupe de la membrane de cuisson des figures 1A, 1B et 3 dans la troisième zone de drainage, selon un plan de coupe perpendiculaire à la direction longitudinale des canaux, de sorte à faire apparaître la profondeur desdits canaux creusés dans l'épaisseur de ladite membrane de cuisson.

La présente invention concerne un procédé de cuisson d'un pneumatique 1.

Au cours de ce procédé, on déploie une membrane de cuisson 2 à l'encontre d'une ébauche de pneumatique 3 afin d'amener une surface de contact 4 de ladite membrane de cuisson 2 en appui contre une surface intérieure 5 de ladite ébauche de pneumatique 3 et de presser ainsi une surface extérieure 6 de ladite ébauche de pneumatique contre les parois 21 d'un moule de cuisson 7 de manière à obtenir un pneumatique 1 qui présente une zone sommet 11, formant une bande de roulement annulaire autour d'un axe central Z, ainsi que, de chaque côté d'un plan équatorial P_EQ normal audit axe central Z, une zone de bourrelet 13 permettant de fixer ledit pneumatique sur une jante, et une zone de flanc 12 qui relie la zone sommet 11 à la zone de bourrelet 13.

Comme indiqué plus haut, l'ébauche de pneumatique 3 sera de préférence obtenue en posant et enroulant sur un tambour une pluralité de composants, parmi lesquels on trouvera de préférence un film d'étanchéité à l'air, dit « gomme intérieure », une ou des nappes de renfort à base de caoutchouc renforcées par des fils de renfort, parmi lesquelles de préférence une nappe carcasse et des nappes de sommet, ainsi qu'une paire de tringles 14 annulaires destinée à renforcer la zone de bourrelet 13.

Tel que cela est visible sur la figure 2, l'ébauche de pneumatique 3, tout comme le pneumatique 1 fini, présentera sensiblement une forme de révolution, toroïdale, centrée sur l'axe central Z, ladite forme comprenant la zone sommet 11, deux zones de bourrelet 13, 13' et deux zones de flanc 12, 12'. En pratique, l'axe central Z correspondra au futur axe de rotation de la roue à laquelle le pneumatique 1 est destiné à être intégré.

Par commodité de description, on pourra assimiler les différentes zones et surfaces 5, 6 de l'ébauche de pneumatique 3 aux différentes zones 11, 12, 13 et surfaces correspondantes du pneumatique fini 1.

Par convention, on désignera par « axiale » une direction parallèle à, voire confondue avec, l'axe central Z, et par « radiale » une direction perpendiculaire audit axe central Z.

Par analogie avec la topologie du globe terrestre, on désignera par « plan équatorial » P_EQ le plan normal à l'axe central Z qui divise axialement le pneumatique 1, et qui, de même, divise axialement l'ébauche de pneumatique 3, en deux portions sensiblement symétriques, dites « hémisphères ».

Par convention, on considère que le pneumatique 1, ou, de façon similaire, l'ébauche de pneumatique 3, présente le long de l'axe central Z, une dimension hors-tout dite « largeur de section » B1, qui correspond, tel que cela est visible sur la figure 2, à la distance, mesurée parallèlement à l'axe central Z, entre d'une part un premier plan de jauge fictif qui est normal à l'axe central Z et qui vient au contact tangent contre la surface extérieure 6 dudit pneumatique 1, respectivement contre la surface extérieure de l'ébauche de pneumatique 3, d'un premier côté dudit pneumatique 1, ici contre la première zone de flanc 12, et d'autre part un second plan de jauge fictif qui est parallèle au premier plan de jauge et qui vient au contact tangent contre la surface extérieure 6 dudit pneumatique 1, respectivement de ladite ébauche de pneumatique 3, d'un second côté du pneumatique opposé au premier côté, ici contre la seconde zone de flanc 12'. Par convention, le plan équatorial P_EQ est alors situé axialement à la moitié de ladite largeur de section B1, de sorte à couper la zone sommet 11 en son milieu.

L'intersection du plan équatorial P_EQ avec la surface radialement externe du pneumatique 1 forme une ligne dite « ligne équatoriale » EQ_1, de forme circulaire et centrée sur l'axe central Z, située axialement au milieu de la zone sommet 11, et qui correspond en pratique au contour formé par l'ensemble des points radialement les plus externes du pneumatique 1.

Dans ce qui suit, on concentrera plus particulièrement la description de l'invention en lien avec un hémisphère du pneumatique comprenant une partie (ici la moitié) de la zone sommet 11, une zone de flanc 12 et une zone de bourrelet 13, et donc en lien avec l'hémisphère correspondant de la membrane de cuisson 2. Bien entendu, la description s'applique de préférence *mutatis mutandis* à l'autre hémisphère, et en particulier à la seconde zone de flanc 12' et la seconde zone de bourrelet 13'.

Sur la figure 2, on voit, en section dans un plan sagittal contenant l'axe central Z, une représentation schématique simplifiée d'un moule 7 de cuisson permettant le moulage et la vulcanisation d'un pneumatique 1.

Un tel moule 7 de cuisson comprend plusieurs pièces rigides qui définissent, lorsque ledit moule est en configuration fermée, une cavité de moulage 20 délimitée par des parois 21 dont l'agencement correspond à la forme que l'on souhaite conférer à la surface extérieure 6 du pneumatique. Ces pièces rigides peuvent être agencées par exemple en deux parties moulantes qui viennent au contact l'une de l'autre, lorsque le moule est fermé, selon un plan de joint qui se confond avec le plan équatorial P_EQ. Des actionneurs sont prévus pour manoeuvrer ces parties moulantes afin de fermer le moule 7 après mise en place de l'ébauche de pneumatique 3 et avant de démarrer la cuisson, puis ouvrir le moule 7 en fin de cuisson pour extraire le pneumatique 1 cuit. Au centre du moule, on trouve une tige centrale qui supporte deux plateaux 22, 23 en forme de disques, maintenus axialement à distance l'un de l'autre, et sur lesquels la membrane de cuisson 2 est fixée de manière étanche par ses extrémités, dites « talons » 24, 25, de sorte que le volume interne délimité par la membrane de cuisson 2 forme une poche capable de recevoir et contenir un fluide de gonflage, de préférence caloporteur, tel que de la vapeur d'eau, qui est injecté sous pression pour la cuisson, puis évacué en fin de cuisson, au moyen d'au moins un orifice prévu à cet effet dans au moins l'un des plateaux 22, 23.

Tel que cela est visible sur les figures 1A et 2, la membrane de cuisson 2 comprend un corps 26 tubulaire creux, élastiquement expansible, dont la surface externe forme la surface de contact 4 venant en appui contre l'ébauche de pneumatique 3, et qui est délimité axialement par deux extrémités formant un premier talon 24 et un second talon 25.

La membrane de cuisson 2 présente globalement une forme de révolution, dont l'axe central Z et, respectivement, le plan équatorial P_EQ se confondront avec l'axe central Z du pneumatique et, respectivement, avec le plan équatorial P_EQ du pneumatique, au moins lors de la phase de cuisson au sein du moule 7, lorsque la membrane de cuisson 2 se trouve à l'état gonflé et plaque l'ébauche de pneumatique 3 dans la configuration qui correspond au pneumatique 1 fini.

La membrane de cuisson 2 est de préférence réalisée en caoutchouc butyle avec une vulcanisation à la résine. Un tel matériau présente en effet une bonne étanchéité vis-à-vis du fluide de gonflage et une bonne tenue à des cycles répétés de cuisson. En particulier, l'utilisation d'une résine comme agent de vulcanisation, en lieu et place du soufre, permet de vulcaniser la membrane de cuisson 2 à une température élevée, tandis que les cycles de cuisson des pneumatiques s'opèrent ensuite à des températures inférieures, qui sont donc bien supportées par ladite membrane de cuisson 2.

La membrane de cuisson 2 sera de préférence fabriquée par moulage sur un noyau présentant une forme nominale en tonneau, avec un diamètre qui est plus grand dans sa partie centrale, au niveau du plan équatorial P_EQ, qu'au niveau des extrémités axiales dudit noyau. Ainsi, la membrane de cuisson 2 présentera de préférence une forme nominale au repos, avant mise en oeuvre dans le moule, qui sera conjuguée à celle du noyau, et donc ici une forme en tonneau, avec un bombé dans sa partie équatoriale.

Plus globalement, la membrane de cuisson 2 présentera ainsi de préférence, au repos, hors du moule 7, une surface de contact 4 de forme cylindrique bombée, sensiblement ovoïdale, qui s'étend autour et le long d'un axe central Z depuis un premier talon 24 formant un pôle nord, jusqu'à un second talon 25 formant un pôle sud, en passant par une ligne équatoriale EQ_2 centrée sur l'axe central Z et comprise dans un plan équatorial P_EQ normal audit axe central Z, qui divise la surface de contact 4 en un hémisphère nord 4N et un hémisphère sud 4S.

Avantageusement, compte-tenu de ce qui précède, on associera, par commodité de description, le même référentiel, basé sur l'axe central Z et le plan équatorial P_EQ, à la membrane de cuisson 2, à l'ébauche de pneumatique 3 et au pneumatique 1, et l'on utilisera donc les mêmes références pour désigner l'axe central Z et le plan équatorial P_EQ indifféremment au sein de la membrane de cuisson 2, du pneumatique 1, ou de l'ébauche de pneumatique 3.

Par souci de clarté, en revanche, on pourra de préférence distinguer la ligne équatoriale EQ_2 de la membrane 2 de la ligne équatoriale EQ_1 du pneumatique 1.

Selon l'invention, la surface de contact 4 de la membrane de cuisson 2 est pourvue d'une structure de drainage 30 qui comprend des chemins d'évacuation d'air C31, C32, C33 creusés sur la surface de contact 4 selon une profondeur égale ou supérieure à 0,05 mm, dits « canaux » C31, C32, C33.

Au sens de l'invention, sont considérés comme des canaux C31, C32, C33 les éléments creusés dans la surface de contact 4 qui sont aptes à évacuer l'air vers les talons 24, 25 et dont la profondeur est jugée suffisamment significative pour remplir intentionnellement une telle fonction. En l'espèce, cette profondeur devra donc être égale ou supérieure à une valeur seuil prédéterminée, dite « seuil bas », que l'on choisira ici égale à 0,05 mm.

Cette profondeur est de préférence mesurée sur la membrane de cuisson 2 considérée au repos, c'est-à-dire non distendue par le fluide de gonflage, et plus préférentiellement alors que ladite membrane de cuisson 2 se trouve en configuration lâche, à pression atmosphérique ambiante, par exemple alors que la membrane de cuisson 2 est hors du moule.

Par ailleurs, à titre indicatif, les parties dites « lisses » de la surface de contact 4 non creusées en canaux, et plus particulièrement les parties dites « lisses » de la structure de drainage 30 qui forment les reliefs pleins M31_in, M32_in, M33_in séparant des canaux C31, C32, C33 adjacents et qui sont destinées à venir au contact direct contre la surface intérieure 5 du pneumatique 1, présenteront une rugosité très nettement inférieure à la valeur de 0,05 mm considérée comme seuil bas des canaux. De préférence, les surfaces correspondantes du noyau, qui est utilisé pour fabriquer la membrane de cuisson 2 par moulage, présenteront à cet effet une rugosité Ra (écart moyen arithmétique du profil) égale, voire inférieure, à 1,6 µm.

Selon l'invention, la structure de drainage 30 se subdivise, au moins d'un côté du plan équatorial P_EQ, et de préférence de façon similaire voire symétrique de chaque côté dudit plan équatorial P_EQ, en au moins trois zones de drainage 31, 32, 33, dont :
- une première zone de drainage 31 qui correspond à une première portion annulaire de la surface de contact 4, centrée sur l'axe central Z, selon laquelle ladite surface de contact 4, et plus particulièrement la structure de drainage 30, vient épouser la zone sommet 11,
- une seconde zone de drainage 32 qui correspond à une seconde portion annulaire de la surface de contact 4, centrée sur l'axe central Z, selon laquelle ladite surface de contact 4, et plus particulièrement la structure de drainage 30, vient épouser la zone de flanc 12, et dont les canaux C32 communiquent avec les canaux C31 de la première zone de drainage 31,
- et une troisième zone de drainage 33 qui correspond à une troisième portion annulaire de la surface de contact 4, centrée sur l'axe central Z, selon laquelle ladite surface de contact 4, et plus particulièrement la structure de drainage 30, vient épouser la zone de bourrelet 13, et dont les canaux C33 communiquent avec les canaux C32 de la seconde zone de drainage 32.

Toujours selon l'invention, la profondeur moyenne des canaux C33 de la troisième zone de drainage 33 est strictement supérieure à la profondeur moyenne des canaux C32 de la seconde zone de drainage 32, ladite profondeur moyenne des canaux C32 de la seconde zone de drainage 32 étant elle-même strictement supérieure à la profondeur moyenne des canaux C31 de la première zone de drainage 31.

Au sens de l'invention, la « profondeur moyenne des canaux » d'une zone de drainage 31, 32, 33 considérée, qu'il s'agisse de la première zone de drainage 31, de la seconde zone de drainage 32, ou respectivement de la troisième zone de drainage 33, est égale au quotient du volume occupé par les canaux C31, C32, C33 présents dans ladite zone de drainage 31, 32, 33 par la superficie couverte par ces mêmes canaux C31, C32, C33 sur ladite zone de drainage 31, 32, 33.

Par « portion annulaire », on désigne une bande annulaire de la surface de contact 4, comprise entre deux lignes parallèles à la ligne équatoriale EQ_2.

La profondeur moyenne des canaux C31, C32, C33 dans la zone de drainage 31, 32, 33 considérée est ainsi égale au quotient d'une part, au numérateur, du volume de l'ensemble des canaux C31, C32, C33 (de toutes formes et/ou tailles le cas échéant, pourvu que la profondeur desdits canaux soit supérieure ou égale au seuil bas de 0,05 mm susmentionné) creusés dans ladite bande annulaire de la surface de contact 4 par, d'autre part, au dénominateur, le produit de la largeur par la longueur cumulée de l'ensemble de ces mêmes canaux C31, C32, C33 présents dans ladite bande annulaire, ledit produit correspondant en effet à la superficie occupée par les découpes de ces canaux C31, C32, C33 à la surface de la bande annulaire de la surface de contact 4.

Avantageusement, la profondeur moyenne qui est propre à la zone de drainage considérée est strictement supérieure à la profondeur moyenne de la zone de drainage qui la précède, dans un sens qui correspond au sens global de l'écoulement de l'air, et qui va donc de la zone sommet 11 jusqu'à la zone de bourrelet 13, en passant par la zone de flanc 12. Ainsi, la profondeur moyenne des canaux C31, C32, C33 va globalement en augmentant dans le sens allant de la première zone de drainage 31 vers la troisième zone de drainage 33, en passant par la seconde zone de drainage 32 interposée entre lesdites première et troisième zones de drainage 31, 33, et donc dans le sens allant de la zone sommet 11 vers la zone de bourrelet 13, et plus particulièrement dans le sens allant de la ligne équatoriale EQ_2 vers un talon 24, 25.

Comme indiqué plus haut, un tel agencement permet de répartir au mieux les capacités de drainage de la membrane de cuisson 2 dans l'espace, par rapport aux zones 11, 12, 13 du pneumatique 1 à drainer (zone sommet 11, zone de flanc 12, zone de bourrelet 13), et dans le temps, en fonction de l'ordre d'établissement des contacts entre la membrane de cuisson 2 et les différentes zones 11, 12, 13 du pneumatique 1.

Ainsi, l'agencement selon l'invention permet de prévoir, en vis-à-vis de chaque zone du pneumatique (zone sommet 11, zone de flanc 12, zone de bourrelet 13), la structure de drainage la plus appropriée, compte-tenu du volume d'air à évacuer dans ladite zone 11, 12, 13 du pneumatique ainsi que de l'ordre dans lequel la membrane de cuisson 2 vient successivement au contact des différentes zones du pneumatique.

En outre, l'agencement proposé par l'invention permet avantageusement d'adapter le comportement de la membrane de cuisson 2 au fait que l'ébauche de pneumatique 3, de même que la membrane de cuisson 2, ne subit pas en tout point une élongation homogène sous l'effet du gonflage, puisque le degré d'élongation est notamment sensible à la distance à l'axe central Z de la zone considérée. En effet, ladite élongation est plus importante, proportionnellement, dans la zone sommet 11, qui présente un grand diamètre, que dans la zone de bourrelet 13, qui présente un diamètre plus faible. Ainsi, en combinant le choix de la profondeur des canaux 31, 32, 33 avec une répartition judicieuse desdits canaux en fonction de la zone du pneumatique 11, 12, 13 concernée, on parvient gérer au mieux à la fois le degré de pénétration en profondeur de la gomme intérieure dans les canaux d'une part, et l'élongation surfacique, et notamment l'élongation circonférentielle, de ladite gomme intérieure en proportion de la distance à l'axe central Z d'autre part, ce qui permet de contrôler assez finement la déformation plastique et la striction de ladite gomme intérieure en les différents points du pneumatique 1.

La profondeur des canaux C31, C32, C33 de chaque zone de drainage 31, 32, 33 est avantageusement choisie de manière à être, en tout point du pneumatique 1 et donc en tout point correspondant de la surface de contact 4 de la membrane de cuisson 2, d'une part suffisamment élevée pour assurer un débit et une durée d'évacuation de l'air suffisants pour purger la totalité de l'air emprisonné entre la membrane de cuisson 2 et les zones du pneumatique 11, 12, 13 recouvertes, tout en étant d'autre part suffisamment faible pour éviter une déformation significative et donc une perte d'épaisseur significative du film d'étanchéité formant la surface intérieure 5 du pneumatique 1.

L'invention permet donc d'appliquer une configuration de zone de drainage 31, 32, 33 différente à chaque zone 11, 12, 13 du pneumatique (zone sommet 11, zone de flanc 12, zone de bourrelet 13), et ainsi d'opérer une distinction, en quelque sorte une personnalisation, de l'opération de drainage que l'on réalise, en fonction de la zone du pneumatique à drainer et de l'ordre d'apposition de la membrane de cuisson 2 contre lesdites zones 11, 12, 13 du pneumatique, en appliquant dans chaque zone du pneumatique la quantité juste nécessaire et suffisante de volume de canaux.

On notera que l'invention permet avantageusement de séparer spatialement différents types de canaux C31, C32, C33 en fonction de la profondeur caractéristique de chacun de ces types de canaux, en répartissant lesdits canaux dans les zones de drainage 31, 32, 33 par ordre, ici par ordre croissant, de profondeur caractéristique. De la sorte, l'invention permet de limiter globalement la profondeur des canaux de la structure de drainage 30, et ainsi de globalement restreindre les irrégularités de la surface de contact 4, et par conséquent de limiter l'étendue de la surface développée que l'opération de moulage impose à la gomme intérieure du pneumatique.

En ceci, l'invention peut notamment se distinguer des structures de drainage connues de l'état de la technique au sein desquelles, au lieu de chercher à répartir les différents types de canaux en zones de drainage distinctes, en fonction de la profondeur caractéristique de chaque type de canaux et de la zone 11, 12, 13 du pneumatique 1 avec laquelle ladite zone de drainage 31, 32, 33 doit coopérer, on entremêle au contraire, dans une même zone de drainage annulaire, notamment dans une même zone de drainage annulaire qui vient au contact de la zone sommet 11 du pneumatique, plusieurs types de canaux, par exemple deux voire trois types de canaux présentant chacun une profondeur caractéristique différente, parmi lesquels d'une part des canaux peu profonds, par exemple présentant une plage de profondeur qui est typique de celle que l'invention propose d'attribuer plus spécifiquement aux canaux C31 caractéristiques de la première zone de drainage 31, et d'autre part des canaux profonds, présentant une plage de profondeur caractéristique qui est ici préférentiellement réservée à la troisième zone de drainage 33 selon l'invention.

Avantageusement, la première, la seconde et la troisième zone de drainage 31, 32, 33 occupent chacune, en référence à la ligne équatoriale EQ_2, une plage de latitude distincte, qui leur est propre, et qui est définie en fonction notamment de la plage de latitude occupée par la zone 11, 12, 13 respective du pneumatique 1 contre laquelle doit venir en appui chacune desdites première, seconde et troisième zones de drainage 31, 32, 33.

Ainsi, on peut identifier sur la surface de contact 4 de la membrane de cuisson, le long d'une ligne méridienne qui suit ladite surface de contact 4 en partant de la ligne équatoriale EQ_2 pour arriver à un talon 24, une première zone de drainage 31 occupant une première plage de latitude, ici la plus proche du plan équatorial P_EQ et de préférence contenant ou bordée par la ligne équatoriale EQ_2, une seconde zone de drainage 32 occupant une seconde plage de latitude, non chevauchante avec la première plage de latitude, puis une troisième zone de drainage 33 occupant une troisième plage de latitude, plus proche du talon 24 que la première et la seconde plage de latitude, et non chevauchante avec la seconde plage de latitude, de manière à ce que la première zone de drainage 31 vienne en appui contre la zone de sommet 11, la seconde zone de drainage 32 contre la zone de flanc 12, et la troisième zone de drainage 33 contre la zone de bourrelet 13.

On notera que, dans l'absolu, au sens de l'invention, au sein d'une même zone de drainage 31, 32, 33, on pourrait trouver plusieurs types de canaux C31, C32, C33, agencés selon des motifs de tracé distincts et/ou des profondeurs distinctes, qui coexistent au sein de ladite zone de drainage, et dont la profondeur moyenne sera calculée, comme indiqué ci-dessus, en rapportant le volume total de vide défini par ces canaux à la superficie totale occupée par ces mêmes canaux dans la zone de drainage considérée.

Ceci étant, par commodité de réalisation, et comme cela sera détaillé plus bas, on pourra associer à chaque zone de drainage 31, 32, 33 un type de canaux, ou « famille de canaux », qui est caractéristique de ladite zone de drainage, et qui présente un seul et même motif géométrique de tracé et/ou une seule et même profondeur ou plage de profondeurs prédéterminée dans toute la zone de drainage 31, 32, 33 considérée, de telle sorte que l'on pourra en pratique faire coïncider, notamment visuellement, les frontières des zones de drainage, et plus particulièrement les parallèles P1, P2 définissant les frontières des plages de latitude occupées respectivement par chacune desdites zones de drainage 31, 32, 33, avec les limites à partir desquelles apparaît successivement chacune des familles de canaux C31, C32, C33 propres à chaque zone de drainage 31, 32, 33.

En d'autres termes, les frontières entre les zones de drainage 31, 32, 33 pourront, selon une variante préférée de l'invention, coïncider avec les frontières matérielles auxquelles on observe un changement du type de canaux C31, C32, C33, et plus particulièrement un changement soit du motif géométrique du tracé des canaux C31, C32, C33 à la surface de contact 4, soit de la profondeur des canaux C31, C32, C33, soit de ces deux paramètres.

Plus particulièrement, on pourra ainsi trouver dans la première zone de drainage 31 une première famille de canaux C31, dans la seconde zone de drainage 32 une seconde famille de canaux C32 que l'on ne retrouve pas dans la première zone de drainage 31 et dont au moins une caractéristique dimensionnelle, notamment la profondeur, est différente de la caractéristique correspondante de la première famille de canaux C31, et, de même, on pourra trouver dans la troisième zone de drainage 33 une troisième famille de canaux C33 que l'on ne retrouve pas dans la seconde zone de drainage 32, ni dans la première zone de drainage 31, et dont au moins une caractéristique dimensionnelle, notamment la profondeur, est différente de la caractéristique correspondante de la seconde famille de canaux C32. La frontière entre la première zone de drainage 31 et la seconde zone de drainage 32, typiquement un premier parallèle P1, pourra alors correspondre à la lisière d'apparition de la seconde famille de canaux C32, et, de même, la frontière entre la seconde zone de drainage 32 et la troisième zone de drainage 33, typiquement un second parallèle P2, pourra alors correspondre à la lisière d'apparition de la troisième famille de canaux C33.

De préférence, tel que cela est visible sur les figures 1A et 2, la frontière entre la première zone de drainage 31 et la seconde zone de drainage 32 suit une ligne P1 dite « premier parallèle » le long de laquelle la normale N1 à la surface intérieure 5 du pneumatique 1 est inclinée, par rapport à l'axe central Z, d'un angle A1 dit « premier angle de déclinaison » A1 qui est compris entre 40 degrés et 85 degrés, de préférence entre 45 degrés et 85 degrés, voire entre 50 degrés et 80 degrés.

Le premier angle de déclinaison A1 susmentionné est ici considéré en projection dans un plan de coupe sagittal qui contient l'axe central Z, vis-à-vis de la coupe en section droite du pneumatique 1, tel que cela est visible sur la figure 2.

En pratique, le premier parallèle P1 est choisi pour coïncider sensiblement avec un point dit « premier point singulier » qui correspond au passage de la zone sommet 11 à la zone de flanc 12.

Avantageusement, la frontière entre la première zone de drainage 31 et la seconde zone de drainage 32 se situe ainsi à la transition entre la zone sommet 11 et la zone de flanc 12, de préférence sensiblement à la mi-épaule du pneumatique, ce qui permet à la première zone de drainage 31 de la membrane de cuisson 2 de couvrir quasiment en totalité la zone de sommet 11, puis à la seconde zone de drainage 32 de venir s'appliquer ensuite progressivement contre la zone de flanc 12 du pneumatique, au fur et à mesure de la poursuite du déploiement de la membrane de cuisson 2, dans le creux de ladite zone de flanc 12, et plus particulièrement dans la partie axialement la plus externe de la surface intérieure 5 de ladite zone de flanc 12 du pneumatique 1.

On notera que les valeurs de premier angle de déclinaison A1 susmentionnées correspondent ici à celles que l'on relèverait alors que la membrane de cuisson 2 se trouve à l'état gonflé, pendant la cuisson dans le moule 7, et correspondent donc en pratique à la forme du pneumatique 1 fini.

En outre, les plages de premier angle de déclinaison A1 susmentionnées correspondent avantageusement en pratique à celles observées et applicables lors du moulage de la plupart des dimensions de pneumatiques 1, voire de toutes les dimensions de pneumatiques 1, que peut considérer l'homme du métier.

Ceci étant, le cas échéant, et notamment si un pneumatique 1 présentait des proportions très spécifiques, et notamment si un pneumatique 1 présentait un rapport H1/B1 particulier, où H1 désigne, tel que cela est visible sur la figure 2, la hauteur radiale hors-tout de la section du pneumatique 1, c'est-à-dire l'étendue radiale occupée, du bourrelet jusqu'au sommet, par la section du pneumatique 1 par rapport à l'axe central Z, et où B1 désigne la largeur de section, c'est-à-dire à la largeur axiale hors-tout, dudit pneumatique 1, on pourrait alors envisager d'adapter, notamment en fonction dudit rapport H1/B1, ces valeurs d'angle de déclinaison A1, afin de conserver une frontière entre la première zone de drainage 31 et la seconde zone de drainage 32 qui coïncide sensiblement avec la transition entre la zone sommet 11 et la zone de flanc 12 dudit pneumatique.

De préférence, la frontière entre la seconde zone de drainage 32 et la troisième zone de drainage 33 suit une ligne P2 dite « second parallèle » le long de laquelle la normale N2 à la surface intérieure 5 du pneumatique 1 forme, par rapport à l'axe central Z, un angle A2 dit « second angle de déclinaison » A2 qui est compris entre zéro degré et 30 degrés.

On notera que cette valeur de second angle de déclinaison A2 est une valeur absolue, et que le signe du second angle de déclinaison A2, c'est-à-dire le signe de l'angle formé en partant de l'axe central pour aller jusqu'à la normale considérée, pourra être opposé, tel que cela est le cas sur la figure 2, au signe du premier angle de déclinaison A1 qui caractérise le premier parallèle P1.

Plus particulièrement, on pourra considérer, par convention, que le signe de l'angle de déclinaison A1, A2 d'une normale N1, N2 à la surface intérieure 5 du pneumatique est positif dans la portion de la surface intérieure 5 comprise entre le plan équatorial P_EQ et la ligne de crête LC qui correspond au fond de la zone de flanc 12, c'est-à-dire qui passe, dans chaque section droite du pneumatique 1, par le point de ladite surface intérieure du pneumatique qui est axialement le plus externe, c'est-à-dire le plus distant axialement du plan équatorial P_EQ, tandis que l'angle de déclinaison devient négatif lorsque l'on franchit la ligne de crête LC pour passer dans la portion de surface intérieure 5 qui est comprise entre ladite ligne de crête LC et le bourrelet 13 du pneumatique qui est le plus proche, ou respectivement le talon 24 de la membrane de cuisson 2 qui est le plus proche, en considérant que l'on parcourt la surface intérieure 5 du pneumatique en provenance de la ligne équatoriale EQ_2 de la membrane de cuisson 2 et en direction dudit talon 24. On notera que sur la ligne de crête LC, la normale à la surface intérieure 5 du pneumatique 1 est parallèle à l'axe central Z, si bien que son angle de déclinaison est nul.

En tout état de cause, grâce à l'agencement proposé, selon lequel le premier parallèle P1 est agencé de sorte à venir se placer entre la zone sommet 11 et la ligne de crête LC, selon un premier angle de déclinaison A1 positif, tandis que le second parallèle P2 formant la frontière entre la seconde zone de drainage 32 et la troisième zone de drainage 33 est destiné à venir se placer au-delà de la ligne de crête LC, entre ladite ligne de crête LC et le talon 24, selon un second angle de déclinaison A2 négatif, on s'assure que le point axialement le plus externe de la surface intérieure 5 du pneumatique 1, par lequel s'achève en principe le déploiement de la membrane de cuisson 2, et donc plus globalement la ligne de crête LC, se retrouve dans la seconde zone de drainage 32 de la membrane de cuisson 2.

En pratique, le second parallèle P2 est choisi pour coïncider sensiblement avec un second point singulier qui correspond à la transition entre la zone de flanc 12 et la zone de bourrelet 13.

Ici encore, les plages de valeurs envisagées ci-dessus pour le second angle de déclinaison A2 concernent de préférence des pneumatiques 1 possédant un rapport H1B1 considéré comme usuel, et pourront si nécessaire, notamment si des proportions spécifiques du pneumatique le justifient, être adaptées en conséquence, par exemple en fonction du rapport H1/B1.

Comme indiqué plus haut, on associe à chaque zone de drainage 31, 32, 33 une profondeur moyenne, et donc un degré d'échelle de profondeur, qui est propre à ladite zone de drainage, et qui augmente au fur et à mesure que l'on franchit, dans cet ordre, la première zone de drainage 31, puis la seconde zone de drainage 32, puis la troisième zone de drainage 33.

Plus particulièrement, on pourra affecter respectivement à la structure de drainage 30 au moins trois degrés d'échelle successifs, à savoir un premier degré d'échelle dit « microscopique » dans la première zone de drainage 31, un second degré d'échelle dit « mésoscopique » dans la seconde zone de drainage 32, et un troisième degré d'échelle dit « macroscopique » dans la troisième zone de drainage 33.

Ainsi, de préférence, la profondeur moyenne des canaux C31 dans la première zone de drainage 31 est comprise entre 0,05 mm et 0,25 mm.

Avantageusement, ce premier degré de la profondeur moyenne, correspondant à l'échelle « microscopique », permettra de drainer l'air situé en vis-à-vis de la zone sommet 11 du pneumatique 1 sans pour autant provoquer une distension excessive de la gomme intérieure.

On notera que les valeurs de profondeur utilisées pour décrire l'invention seront de préférence les valeurs de profondeur des canaux C31, C32, C33 mesurées sur la membrane de cuisson 2 au repos, hors du moule. Toutefois, il n'est pas exclu, au sens de l'invention, que ces valeurs puissent être obtenues et constatées sur le pneumatique 1 fini, dont la surface intérieure aura pris l'empreinte en négatif de la forme de la membrane de cuisson pendant l'opération de cuisson.

En effet, les inventeurs ont constaté que, en pratique, les hauteurs des reliefs finalement obtenus sur la surface intérieure du pneumatique 1, reliefs qui sont donc conjugués aux canaux C31, C32, C33, sont en fait très proches de, voire égales aux profondeurs desdits canaux considérées sur la membrane de cuisson 2 au repos. En d'autres termes, bien que l'on pourrait s'attendre à ce que la mise en extension surfacique de la membrane de cuisson 2 induise une certaine contraction en épaisseur de ladite membrane de cuisson 2, et donc potentiellement une certaine réduction de la profondeur des canaux, il s'avère en définitive que l'extension de la membrane de cuisson 2 n'a dans les faits quasiment pas d'influence sur les profondeurs respectives des canaux C31, C32, C33, et que ces profondeurs restent quasiment identiques entre la configuration au repos de la membrane de cuisson 2 et la configuration déployée, gonflée, de ladite membrane de cuisson 2.

De préférence, au moins 50%, de préférence au moins 80%, voire 100% des canaux C31 de la première zone de drainage 31 présentent une profondeur H31 qui est comprise entre 0,05 mm et 0,25 mm.

En d'autres termes, la première zone de drainage 31 comprendra de préférence majoritairement (> 50%), voire exclusivement (100%), des canaux C31 d'échelle dite « microscopique », dont la profondeur H31, absolue, est supérieure ou égale à 0,05 mm et inférieure ou égale à 0,25 mm.

Les pourcentages susmentionnés correspondent au rapport de la superficie des canaux C31 présents dans la première zone de drainage 31 et possédant une profondeur comprise dans la première plage de profondeur susmentionnée, à savoir [0,05 mm ; 0,25 mm], par la superficie totale occupée par l'ensemble des canaux présents dans ladite première zone de drainage 31.

Avantageusement, du fait qu'un même type de canaux, à savoir les canaux C31de type « microscopique », prédomine au sein de la première zone de drainage 31, voire dans la mesure où l'on trouve uniquement des canaux C31de type « microscopique » au sein de ladite première zone de drainage 31, ladite première zone de drainage 31 présente des chemins d'écoulement de profondeur relativement homogène, voire parfaitement homogène, ce qui permet notamment de simplifier et standardiser la fabrication de la membrane de cuisson 2, et d'assurer une bonne maîtrise de l'écoulement d'air lors de la cuisson.

On notera que, dans l'absolu, la profondeur H31 des canaux C31 d'échelle microscopique de la première zone de drainage 31 pourrait varier d'un canal C31 à l'autre, ou le long d'un même canal C31, sans sortir du cadre de l'invention, dès lors que, en tout point du canal C31 considéré dans la première zone de drainage 31, ladite profondeur H31 reste contenue dans la première plage de profondeur susmentionnée, à savoir [0,05 mm ; 0,25 mm].

Cependant, selon une variante de réalisation préférentielle, la majorité (> 50%), et de préférence la totalité (100%), des canaux C31 de la première zone de drainage 31 présenteront une profondeur H31 identique et constante, comprise dans la première plage de profondeur susmentionnée, à savoir [0,05 mm ; 0,25 mm],

Cette homogénéité facilitera notamment la fabrication de la membrane de cuisson 2.

On notera du reste que si tous les canaux d'une même zone de drainage présentent une profondeur identique et constante, dite « profondeur nominale », et en particulier si ladite zone de drainage comporte exclusivement un seul et même type de canaux d'une profondeur nominale constante donnée, alors la profondeur moyenne sur ladite zone de drainage sera avantageusement égale à ladite profondeur nominale.

De manière analogue, la profondeur moyenne des canaux C32 dans la seconde zone de drainage 32 est de préférence comprise entre 0,25 mm et 0,45 mm.

Préférentiellement, au moins 50%, de préférence au moins 80%, voire 100% des canaux C32 de la seconde zone de drainage 32 présentent une profondeur H32 qui est comprise entre 0,25 mm et 0,45 mm.

Ici encore, ceci permet de se doter d'une seconde zone de drainage 32 qui est majoritairement (> 50%) voire exclusivement (100%) pourvue de canaux C32 d'échelle dite « mésoscopique », dont la profondeur H32 absolue est comprise dans une seconde plage de profondeur, ici [0,25 mm ; 0,45 mm], qui est supérieure à la première plage de profondeur susmentionnée, à savoir [0,05 mm ; 0,25 mm], et non chevauchante avec ladite première plage de profondeur.

De préférence, tous les canaux C32 de la seconde zone de drainage 32 seront d'une profondeur H32 strictement supérieure à la profondeur H31, ou le cas échéant à l'ensemble des profondeurs H31, des canaux C31 présents dans la première zone de drainage 31.

En d'autres termes, la profondeur minimale des canaux C32 de la seconde zone de drainage 32, ou plus particulièrement, le cas échéant, la profondeur minimale des canaux C32 qui sont propres à la seconde zone de drainage 32 et que l'on ne retrouve donc pas dans la première zone de drainage 31, sera de préférence supérieure à la profondeur maximale des canaux C31 de la première zone de drainage 31.

On favorisera ainsi l'écoulement d'air depuis la première zone de drainage 31 vers et à travers la seconde zone de drainage 32, notamment sans risque de créer au sein du réseau de canaux C31, C32 une poche de rétention qui pourrait garder une bulle d'air emprisonnée, ou provoquer un amincissement local excessif de la gomme intérieure.

Selon une variante de réalisation préférentielle, la majorité (> 50%), et de préférence la totalité (100%), des canaux C32 de la seconde zone de drainage 32 présenteront une profondeur H32 identique et constante, comprise dans la seconde plage de profondeur susmentionnée, à savoir [0,25 mm ; 0,45 mm],

Ici encore, cela simplifiera la fabrication de la membrane de cuisson 2.

De préférence, la profondeur moyenne des canaux C33 dans la troisième zone de drainage 33 est comprise entre 0,45 mm et 1,20 mm.

Préférentiellement, au moins 50%, de préférence au moins 80%, voire 100% des canaux C33 de la troisième zone de drainage 33 présentent une profondeur H33 qui est comprise entre 0,45 mm et 1,20 mm.

Encore plus préférentiellement, selon une variante qui permet de réduire le coût de fabrication de la membrane de cuisson 2 en limitant la hauteur des reliefs du noyau permettant de mouler ladite membrane de cuisson, au moins 50%, de préférence au moins 80%, voire 100% des canaux C33 de la troisième zone de drainage 33 présentent une profondeur H33 qui est comprise entre 0,45 mm et 0,60 mm.

Ici encore, l'invention permet de se doter d'une troisième zone de drainage 33 qui est majoritairement (> 50%) voire exclusivement (100 %) pourvue de canaux C33 d'échelle dite « macroscopique », dont la profondeur H33 absolue est comprise dans une troisième plage de profondeur, ici [0,45 mm ; 1,20 mm], ou respectivement [0,45 mm ; 0,60 mm], qui est supérieure à la seconde plage de profondeur susmentionnée, à savoir [0,25 mm ; 0,45 mm], et non chevauchante avec la seconde plage de profondeur.

De préférence, la majorité, voire l'ensemble des canaux C33 de la troisième zone de drainage 33 seront d'une profondeur H33 strictement supérieure à la profondeur H32, ou le cas échéant à l'ensemble des profondeurs H32, des canaux C32 présents dans la seconde zone de drainage 32.

En d'autres termes, la profondeur minimale des canaux C33 de la troisième zone de drainage 33, ou à tout le moins des canaux C33 propres à la troisième zone de drainage, que l'on ne retrouve pas dans la seconde zone de drainage 32, sera de préférence supérieure à la profondeur maximale des canaux C32 de la seconde zone de drainage 32.

Par ailleurs, selon une variante de réalisation préférentielle, la majorité, et de préférence la totalité, des canaux C33 de la troisième zone de drainage 33 présenteront une profondeur H33 identique et constante, comprise dans la troisième plage de profondeur susmentionnée, à savoir [0,45 mm ; 1,20 mm], ou le cas échéant [0,45mm ; 0,60 mm].

De préférence, tel que cela est illustré sur les figures 3 et 4, la première zone de drainage 31 comprend une première famille de canaux C31 formés par la répétition d'un premier motif M31, qui confère aux canaux C31 de ladite première famille une profondeur H31 comprise entre 0,05 mm et 0,25 mm, une largeur W31 comprise entre 0,4 mm et 1,5 mm, et un premier pas de répétition P31 compris entre 2 mm et 15 mm.

Ce premier motif M31 pourra être de toute forme qui soit adaptée au pavage de la première zone de drainage 31 et qui permette la communication entre canaux C31, C32 nécessaire à l'écoulement de l'air.

Par exemple, ce premier motif M31 pourra prendre la forme d'un polygone, de préférence un polygone régulier, dont les canaux C31 correspondront aux arêtes, et dont la région interne M31_in, correspondant à un relief plein séparant les canaux adjacents, formera la surface de contact 4 de la membrane de cuisson 2, qui vient directement en appui contre la surface intérieure 5 du pneumatique 1, et à partir de laquelle on mesure donc la profondeur H31.

De façon particulièrement préférentielle, et tel que cela est notamment visible sur la figure 3, le premier motif M31 sera hexagonal.

Avantageusement, le premier motif M31 se répétera sur toute la circonférence de la bande annulaire formant la première zone de drainage 31, de sorte à couvrir un secteur angulaire de 360 degrés autour de l'axe central Z, et ainsi permettre un drainage homogène de toute la zone sommet 11 du pneumatique.

De préférence, comme indiqué plus haut, on trouvera majoritairement voire exclusivement ce premier motif M31 dans la première zone de drainage 31.

De préférence, tel que cela est visible sur les figures 3 et 5, la seconde zone de drainage 32 comprend une seconde famille de canaux C32 formés par la répétition d'un second motif M32 qui confère aux canaux C32 de ladite seconde famille une profondeur H32 comprise entre 0,25 mm et 0,45 mm, une largeur W32 comprise entre 0,4 mm et 1,5 mm, et un second pas de répétition P32 compris entre 2 mm et 15 mm.

Tout comme pour le premier motif M31, ce second motif M32 pourra être de toute forme qui soit adaptée au pavage de la seconde zone de drainage 32 et qui permette la communication entre canaux C31, C32, C33 nécessaire à l'écoulement de l'air.

Par exemple, ce second motif M32 pourra prendre la forme d'un polygone, de préférence un polygone régulier, dont les canaux correspondront aux arêtes, et dont la région interne M32_in, correspondant à un relief plein séparant les canaux adjacents, formera la surface de contact 4 de la membrane de cuisson 2, qui vient directement en appui contre la surface intérieure 5 du pneumatique 1, et à partir de laquelle on mesure donc la profondeur H32.

De façon particulièrement préférentielle, et que cela est notamment visible sur la figure 3, le second motif M32 sera hexagonal, en particulier si le premier motif M31 est lui-même hexagonal.

Selon une possibilité d'agencement, et notamment si le premier motif M31 et le second motif M32 sont tous deux hexagonaux, le second pas de répétition P32 pourra être identique au premier pas de répétition P31. Le cas échéant, la largeur W32 des seconds canaux C32 pourra en outre être égale à la largeur W31 des premiers canaux.

En revanche, dans l'un ou l'autre de ces cas, la profondeur H32 des canaux C32 associés au second motif M32 sera strictement supérieure à la profondeur H31 des canaux C31 associés au premier motif M31.

En outre, le second motif M32 se répétera de préférence sur toute la circonférence de la bande annulaire formant la seconde zone de drainage 32, de sorte à couvrir, tout comme de préférence le premier motif M31, un secteur angulaire de 360 degrés autour de l'axe central Z, et ainsi permettre un drainage homogène de toute la zone de flanc 12 du pneumatique.

De préférence, comme indiqué plus haut, on trouvera majoritairement (> 50%) voire exclusivement (100 %) ce second motif M32 dans la seconde zone de drainage 32.

Par ailleurs, tel que cela est illustré sur les figures 3 et 6, la troisième zone de drainage 33 comprend de préférence une troisième famille de canaux C33 formés par la répétition d'un troisième motif M33 qui confère aux canaux C33 de ladite troisième famille une profondeur H33 comprise entre 0,45 mm et 1,20 mm, ou éventuellement entre 0,45 mm et 0,60 mm comme indiqué plus haut, une largeur W33 comprise entre 0,4 mm et 2 mm, et un pas de répétition P33 compris entre 4 mm et 40 mm, voire préférentiellement entre 6 mm et 30 mm.

De préférence, et par exemple en combinaison avec un agencement hexagonal du second motif M32 et le cas échéant avec un agencement hexagonal du premier motif M31, ce troisième motif M33 est en bandes rectilignes parallèles.

Selon ce troisième motif M33, entre deux canaux C33 parallèles consécutifs formant chacun une dépression rectiligne de type rainure, la partie pleine M33_in du motif forme un talus qui correspond à la surface de contact 4 de la membrane de cuisson 2, qui vient au contact direct de la surface intérieure 5 du pneumatique, et par rapport à laquelle on mesure la profondeur H33.

Du fait de leur agencement parallèle, ces canaux C33 de la troisième famille ne comprennent ni coude, ni bifurcation, ni intersection entre eux. Ils sont ainsi particulièrement faciles à réaliser, et efficaces pour permettre à un volume d'air important de circuler avec peu de pertes de charge et le cas échéant un débit élevé.

De préférence, comme cela est visible sur les figures 1B et 3, ces canaux C33 rectilignes sont inclinés par rapport à une ligne méridienne de la membrane de cuisson 2, par exemple de l'ordre de 30 degrés, de sorte à former un motif hélicoïdal autour de l'axe central Z.

De préférence, la seconde zone de drainage 32 est contiguë à la première zone de drainage 31 d'un côté, et contiguë à la troisième zone de drainage 33 de l'autre côté.

Par ailleurs, selon une possibilité d'agencement, on pourra prévoir une ou des zones frontalières mixtes, assurant une transition entre deux zones de drainage consécutives, et dans lesquelles coexistent les motifs de canaux caractéristiques de chacune des zones de drainage bordant ladite zone frontalière.

Ainsi, à titre d'exemple, et tel que cela est visible sur les figures 1B et 3, on pourra prévoir une zone frontalière mixte 33A incluse dans la troisième zone de drainage 33, zone frontalière mixte 33A qui débute au niveau du second parallèle P2 et s'étend vers le talon 24 sur une partie seulement de la bande de latitude occupée par la troisième zone de drainage 33, et au sein de laquelle coexistent les canaux parallèles selon le troisième motif M33, qui débutent à partir du second parallèle P2, et les canaux caractéristiques de la seconde zone de drainage 32 agencés en hexagones selon le second motif M32, qui s'arrêtent au niveau d'un troisième parallèle P3 correspondant à la fin de ladite zone frontalière mixte 33A, à partir duquel on retrouve exclusivement des canaux parallèles C33 qui se poursuivent selon le troisième motif M33. Ainsi, la troisième zone de drainage 33 pourra en définitive présenter tout d'abord une zone mixte 33A, comprenant des canaux selon le deuxième motif M32 et des canaux selon le troisième motif M33, puis une zone exclusive, contenant uniquement des canaux selon le troisième motif M33.

Selon une possibilité d'agencement particulièrement préférée, la membrane de cuisson 2 comprendra une première zone de drainage 31 contenant exclusivement un premier motif M31 hexagonal d'une première profondeur H31 constante, comprise entre 0,05 mm et 0,25 mm, une seconde zone de drainage 32 qui jouxte la première zone de drainage 31, selon une ligne de frontière formant un premier parallèle P1, et qui contient exclusivement un second motif M32 hexagonal, de préférence ayant un même pas de répétition P32 et une même largeur de canaux W32 que le premier motif M31, d'une seconde profondeur H32 constante, supérieure à la première profondeur H31, et comprise entre 0,25 mm et 0,45 mm, et enfin une troisième zone de drainage 33 comprenant un troisième motif M33 en bandes parallèles, de troisième profondeur H33 constante, supérieure à la seconde profondeur H32, et comprise entre 0,45 mm et 1,2 mm. Cette variante inclura de préférence une zone frontalière 33A telle que décrite ci-dessus, entre le second parallèle P2 et le troisième parallèle P3.

Selon une autre variante de réalisation non représentée, le troisième motif M33 en bandes parallèles est remplacé par un troisième motif M33 hexagonal, ayant un troisième pas de répétition P33 supérieur au second pas de répétition P32 du second motif M32 hexagonal, et dont la profondeur H33, constante et supérieure à la profondeur H32 du second motif M32 hexagonal, est comprise entre 0,45 mm et 0,6 mm, et la largeur des canaux W33 comprise entre 0,4 m et 2 mm.

Bien entendu, l'invention porte également sur un pneumatique 1 cuit issu d'un procédé de cuisson selon l'invention selon l'une quelconque des caractéristiques décrites dans ce qui précède, un tel pneumatique 1 étant identifiable à la présence, sur sa face intérieure, d'une structure en relief qui correspond au négatif de la structure de drainage 30 multi-zones selon l'invention.

Ainsi, l'invention porte notamment sur un pneumatique 1 qui présente sur sa surface intérieure 5 trois portions annulaires distinctes, centrées sur l'axe central Z, qui sont situées, d'un même côté du plan équatorial P_EQ, respectivement sous la zone sommet 11, sous la zone de flanc 12 et sous la zone de bourrelet 13 dudit pneumatique 1, et qui contiennent des nervures d'une hauteur égale ou supérieure à 0,05 mm, qui correspondent aux empreintes en négatif respectives des canaux C31, C32, C33 des première, seconde et troisième zones de drainage 31, 32, 33 distinctes, et qui sont dimensionnées de telle sorte que la première portion annulaire présente une hauteur moyenne des nervures strictement inférieure à la hauteur moyenne des nervures de la seconde portion annulaire, ladite hauteur moyenne des nervures de la seconde portion annulaire étant elle-même strictement inférieure à la hauteur moyenne des nervures de la troisième portion annulaire.

De préférence, au sein dudit pneumatique 1, la première portion annulaire comprend majoritairement, et de préférence exclusivement, des nervures dont la hauteur est comprise entre 0,05 mm et 0,25 mm et dont la largeur est comprise entre 0,4 et 1,5 mm, et qui sont agencées selon un premier motif M31 hexagonal se répétant selon un premier pas de répétition P31 compris entre 2 mm et 15 mm, tandis que la seconde portion annulaire comprend majoritairement, et de préférence exclusivement, des nervures dont la hauteur est supérieure à la hauteur des nervures de la première portion annulaire et comprise entre 0,25 et 0,45 mm, dont la largeur est comprise entre 0,4 et 1,5 mm, et qui sont agencées selon un second motif M32 hexagonal qui se répète selon un second pas de répétition P32 compris entre 2 mm et 15 mm, de préférence égal au premier pas de répétition P31, et que la troisième portion annulaire comprend majoritairement, et de préférence exclusivement, des nervures dont la hauteur est supérieure à la hauteur des nervures de la seconde portion annulaire et comprise entre 0,45 mm et 1,2 mm, dont la largeur est comprise entre 0,4 mm et 2 mm, et qui sont agencées soit selon un troisième motif M33 hexagonal qui se répète selon un troisième pas de répétition P33 égal ou supérieur au second pas de répétition P32 et compris entre 4 mm et 40 mm, voire préférentiellement entre 6 mm et 30 mm, soit selon un troisième motif M33 de bandes rectilignes parallèles qui se répète selon un troisième pas de répétition P33 strictement supérieur au second pas de répétition P32 et compris entre 4 mm et 40 mm, voire préférentiellement entre 6 mm et 30 mm.

De même qu'indiqué plus haut, le pneumatique 1 pourra également présenter une zone frontalière mixte assurant la transition entre la seconde et la troisième portion annulaire et correspondant au négatif de la zone frontalière 33A qui forme, sur la membrane de cuisson 2, la transition entre la seconde et la troisième zone de drainage 32, 33.

L'invention concerne enfin en tant que telle une membrane de cuisson 2 destinée à la fabrication d'un pneumatique 1 comprenant une zone sommet 11, une zone de bourrelet 13, et une zone de flanc 12.

Comme indiqué plus haut, ladite membrane de cuisson 2 est pourvue d'une structure de drainage 30 qui comprend des chemins d'évacuation d'air creusés sur la surface de contact selon une profondeur égale ou supérieure à 0,05 mm, dits « canaux » C31, C32, C33 .

Selon l'invention, ladite membrane de cuisson 2 est telle que, au moins dans l'hémisphère nord 4N, et de préférence de façon symétrique dans l'hémisphère nord 4N et dans l'hémisphère sud 4S, on peut définir un premier parallèle P1, distinct de la ligne équatoriale EQ_2 et correspondant à l'intersection de la surface de contact 4 avec un premier plan parallèle au plan équatorial P_EQ, et un second parallèle P2, qui est situé entre le premier parallèle P1 et le talon 24 correspondant et qui correspond à l'intersection de la surface de contact 4 avec un second plan parallèle au plan équatorial P_EQ, de telle sorte que la structure de drainage 30 comprend une première zone de drainage 31 correspondant à la portion de la surface de contact délimitée par la ligne équatoriale EQ_2 et le premier parallèle P1, et dans laquelle les canaux C31 présentent une première profondeur moyenne, une seconde zone de drainage 32, qui correspond à la portion de la surface de contact 4 délimitée par le premier parallèle P1 et le second parallèle P2, et dans laquelle les canaux C32, qui communiquent avec les canaux C31 de la première zone de drainage 31, présentent une seconde profondeur moyenne, strictement supérieure à la première profondeur moyenne des canaux C31 de la première zone de drainage 31, et une troisième zone de drainage 33, qui correspond à la portion de la surface de contact 4 délimitée par le second parallèle P2 et le talon 24 formant le pôle correspondant, et dans laquelle les canaux C33, qui communiquent avec les canaux C32 de la seconde zone de drainage 32, présentent une troisième profondeur moyenne, strictement supérieure à la seconde profondeur moyenne des canaux C32 de la seconde zone de drainage 32.

Bien entendu, les canaux C31, C32, C33 pourront prendre toute forme et/ou dimension découlant de la description qui précède.

En particulier, la membrane de cuisson 2 pourra comprendre une zone frontalière mixte 33A qui assure une transition progressive entre la seconde zone de drainage 32, qui comprend de préférence exclusivement des canaux C32 selon le second motif M32, et la troisième zone de drainage 33.

On notera par ailleurs que, de préférence, afin de concilier endurance et élasticité, la membrane de cuisson 2 présentera, au repos, tel que cela est visible sur la figure 1A, une portion ayant une épaisseur renforcée T33, à proximité de chacun de ses talons 24, 25, portion dans laquelle l'épaisseur T33 de la membrane de cuisson 2 est supérieure à l'épaisseur, dite « épaisseur simple », T31 que cette même membrane de cuisson 2 présente au voisinage de la ligne équatoriale EQ_2.

De préférence, la transition entre l'épaisseur renforcée T33 et l'épaisseur simple T31 se situera au droit du second parallèle P2 qui marque la frontière entre la seconde zone de drainage 32 et la troisième zone de drainage 33.

Avantageusement, ceci permet d'éviter un allongement trop important des portions de la membrane de cuisson 2 qui viennent coopérer avec les zones de bourrelet 13, 13' du pneumatique 1, et de privilégier une extension élastique de la membrane de cuisson 2 dans les portions qui viennent s'appliquer contre la zone sommet 11 et les zones de flanc 12, 12' du pneumatique 1. En outre, ceci permet de plaquer efficacement les zones de bourrelet 13, 13' contre le moule 7, pour obtenir une bonne maîtrise de fabrication desdites zones de bourrelet 13, 13', qui sont particulièrement importantes pour le passage du couple entre la jante et le pneumatique 1 ainsi que pour l'étanchéité du pneumatique 1 sur la jante.

A titre indicatif, l'épaisseur renforcée T33 pourra être comprise entre 6 mm et 9 mm, par exemple égale à 7 mm, tandis que l'épaisseur simple T31 pourra être comprise entre 4 mm et 6 mm, par exemple égale à 5 mm.

Plus globalement, quel que soit l'agencement retenu, l'épaisseur au repos de la membrane de cuisson 2 sera de préférence comprise entre 4 mm et 15 mm.

Compte-tenu de l'agencement symétrique du pneumatique 1, et de la membrane de cuisson 2, par rapport au plan équatorial P_EQ, la première zone de drainage 31 s'étendra de préférence en continu, sans qu'il n'y ait d'interruption de la première famille de canaux C31, de part et d'autre de la ligne équatoriale EQ_2, tandis que la membrane de cuisson 2 présentera deux secondes zones de drainage 32, 32' annulaires situées de part et d'autre de cette première zone de drainage 31 centrale unique, l'une dans l'hémisphère nord 4N et l'autre dans l'hémisphère sud 4S, puis deux troisièmes zones de drainage 33, 33' annulaires qui, de même, joignent chacune un talon 24, 25, et donc un pôle, opposé.

Par simple commodité de notation, on utilisera des références numériques analogues, mais affectées d'un un symbole « prime », pour désigner des éléments de l'hémisphère sud 4S homologues, et en particulier symétriques, à des éléments de l'hémisphère nord 4N, tels que les premier parallèle P1' et second parallèle P2', voire troisième parallèle P3', ou les seconde et troisième zones de drainage 32', 33'.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques mentionnées plus haut ou de leur substituer des équivalents. La portée de la présente invention n'est limitée que par les revendications annexées.

En particulier, on notera que les différentes familles de canaux C31, C32, C33 pourront s'étendre sur des zones de la surface de contact 4 dont les frontières ne suivent pas exactement des parallèles, mais présentent par exemple une inclinaison par rapport à un parallèle, ou une ondulation autour d'un parallèle, dès lors qu'il reste possible de définir, même fictivement, sur ladite surface de contact 4, des zones de drainage annulaires 31, 32, 33 au sens de l'invention, délimitées par des parallèles, et au sein desquelles, en moyenne, et malgré la présence et la coexistence dans l'une au moins desdites zones de drainage annulaire de canaux C31, C32, C33 appartenant à des familles différentes, et présentant par conséquent des profondeurs différentes, on peut calculer et observer une profondeur moyenne qui répond au critère mentionné plus haut, selon lequel la profondeur moyenne de la première zone de drainage 31 est strictement inférieure à la profondeur moyenne de la seconde zone de drainage 32, elle-même strictement inférieure à la profondeur moyenne de la troisième zone de drainage 33.

Toutefois, comme indiqué plus haut, on préférera que les frontières matérielles d'implantation des différentes familles de canaux C31, C32, C33 coïncident avec les parallèles P1, P2 formant les frontières des zones de drainage 31, 32, 33.

## Revendications

1. Procédé de cuisson d'un pneumatique (1) au cours duquel on déploie une membrane de cuisson (2) à l'encontre d'une ébauche de pneumatique (3) afin d'amener une surface de contact (4) de ladite membrane de cuisson (2) en appui contre une surface intérieure (5) de ladite ébauche de pneumatique (3) et de presser ainsi une surface extérieure (6) de ladite ébauche de pneumatique contre les parois (21) d'un moule de cuisson (7) de manière à obtenir un pneumatique (1) qui présente une zone sommet (11) formant une bande de roulement annulaire autour d'un axe central (Z), et, de chaque côté d'un plan équatorial (P_EQ) normal audit axe central (Z), une zone de bourrelet (13) permettant de fixer ledit pneumatique sur une jante, et une zone de flanc (12) qui relie la zone sommet (11) à la zone de bourrelet (13), procédé selon lequel la surface de contact (4) de la membrane de cuisson (2) est pourvue d'une structure de drainage (30) qui comprend des chemins d'évacuation d'air (C31, C32, C33) creusés sur la surface de contact selon une profondeur égale ou supérieure à 0,05 mm, dits « canaux » (C31, C32, C33), dans lequel ladite structure de drainage (30) se subdivise, au moins d'un côté du plan équatorial (P_EQ), en au moins trois zones de drainage (31, 32, 33), dont une première zone de drainage (31) qui correspond à une première portion annulaire de la surface de contact (4), centrée sur l'axe central (Z), selon laquelle ladite surface de contact (4) vient épouser la zone sommet (11), une seconde zone de drainage (32) qui correspond à une seconde portion annulaire de la surface de contact (4), centrée sur l'axe central (Z), selon laquelle ladite surface de contact (4) vient épouser la zone de flanc (12), et dont les canaux (C32) communiquent avec les canaux (C31) de la première zone de drainage (31), et une troisième zone de drainage (33) qui correspond à une troisième portion annulaire de la surface de contact (4), centrée sur l'axe central (Z), selon laquelle ladite surface de contact (4) vient épouser la zone de bourrelet (13), et dont les canaux (C33) communiquent avec les canaux (C32) de la seconde zone de drainage (32), ledit procédé étant **caractérisé en ce que** la profondeur moyenne des canaux (C33) de la troisième zone de drainage (33), qui est égale au quotient du volume occupé par les canaux présents dans ladite zone de drainage par la superficie couverte par ces mêmes canaux sur ladite zone de drainage, est strictement supérieure à la profondeur moyenne des canaux (C32) de la seconde zone de drainage (32), ladite profondeur moyenne des canaux (C32) de la seconde zone de drainage (32) étant elle-même strictement supérieure à la profondeur moyenne des canaux (C31) de la première zone de drainage (31).

2. Procédé selon la revendication 1 **caractérisé en ce que** la frontière entre la première zone de drainage (31) et la seconde zone de drainage (32) suit une ligne dite « premier parallèle » (P1) le long de laquelle la normale (N1) à la surface intérieure (5) du pneumatique est inclinée, par rapport à l'axe central (Z), d'un angle (A1) dit « premier angle de déclinaison » qui est compris entre 40 degrés et 85 degrés, de préférence entre 45 degrés et 85 degrés, voire entre 50 degrés et 80 degrés.

3. Procédé selon la revendication 1 ou 2 **caractérisé en ce que** la frontière entre la seconde zone de drainage (32) et la troisième zone de drainage (33) suit une ligne dite « second parallèle » (P2) le long de laquelle la normale (N2) à la surface intérieure (5) du pneumatique (1) forme, par rapport à l'axe central (Z), un angle (A2) dit « second angle de déclinaison » qui est compris entre zéro degré et 30 degrés.

4. Procédé selon l'une quelconque des revendications précédentes **caractérisé en ce que** la profondeur moyenne des canaux (C31) dans la première zone de drainage (31) est comprise entre 0,05 mm et 0,25 mm.

5. Procédé selon l'une quelconque des revendications précédentes **caractérisé en ce que** au moins 50%, de préférence au moins 80%, voire 100% des canaux (C31) de la première zone de drainage (31) présentent une profondeur (H31) qui est comprise entre 0,05 mm et 0,25 mm.

6. Procédé selon l'une quelconque des revendications précédentes **caractérisé en ce que** la profondeur moyenne des canaux (C32) dans la seconde zone de drainage (32) est comprise entre 0,25 mm et 0,45 mm.

7. Procédé selon l'une quelconque des revendications précédentes **caractérisé en ce que** au moins 50%, de préférence au moins 80%, voire 100% des canaux (C32) de la seconde zone de drainage (32) présentent une profondeur (H32) qui est comprise entre 0,25 mm et 0,45 mm.

8. Procédé selon l'une quelconque des revendications précédentes **caractérisé en ce que** la profondeur moyenne des canaux (C33) dans la troisième zone de drainage (33) est comprise entre 0,45 mm et 1,20 mm.

9. Procédé selon l'une quelconque des revendications précédentes **caractérisé en ce que** au moins 50%, de préférence au moins 80%, voire 100% des canaux (C33) de la troisième zone de drainage (33) présentent une profondeur (H33) qui est comprise entre 0,45 mm et 1,20 mm, de préférence entre 0,45 mm et 0,60 mm.

10. Procédé selon l'une quelconque des revendications précédentes **caractérisé en ce que** la première zone de drainage (31) comprend une première famille de canaux (C31) formés par la répétition d'un premier motif (M31), de préférence hexagonal, qui confère aux canaux (C31) de ladite première famille une profondeur (H31) comprise entre 0,05 mm et 0,25 mm, une largeur (W31) comprise entre 0,4 mm et 1,5 mm, et un premier pas de répétition (P31) compris entre 2 mm et 15 mm.

11. Procédé selon l'une quelconque des revendications précédentes **caractérisé en ce que** la seconde zone de drainage (32) comprend une seconde famille de canaux (C32) formés par la répétition d'un second motif (M32), de préférence hexagonal, qui confère aux canaux (C32) de ladite seconde famille une profondeur (H32) comprise entre 0,25 mm et 0,45 mm, une largeur (W32) comprise entre 0,4 mm et 1,5 mm, et un second pas de répétition (P32) compris entre 2 mm et 15 mm.

12. Procédé selon l'une quelconque des revendications précédentes **caractérisé en ce que** la troisième zone de drainage (33) comprend une troisième famille de canaux (C33) formés par la répétition d'un troisième motif (M33), de préférence en bandes rectilignes parallèles, qui confère aux canaux (C33) de ladite troisième famille une profondeur (H33) comprise entre 0,45 mm et 1,20 mm, une largeur (W33) comprise entre 0,4 mm et 2 mm, et un pas de répétition (P33) compris entre 4 mm et 40 mm, de préférence entre 6 mm et 30 mm.

13. Pneumatique (1) obtenu par un procédé selon l'une quelconque des revendications précédentes, ledit pneumatique présentant ainsi sur sa surface intérieure trois portions annulaires distinctes, centrées sur l'axe central (Z) du pneumatique, qui sont situées, d'un même côté du plan équatorial (P_EQ), respectivement sous sa zone sommet (11), sous sa zone de flanc (12) et sous sa zone de bourrelet (13), et qui contiennent des nervures d'une hauteur égale ou supérieure à 0,05 mm, qui correspondent aux empreintes en négatif respectives des canaux (C31, C32, C33) des première, seconde et troisième zones de drainage (31, 32, 33) distinctes, et qui sont dimensionnées de telle sorte que la première portion annulaire présente une hauteur moyenne des nervures strictement inférieure à la hauteur moyenne des nervures de la seconde portion annulaire, ladite hauteur moyenne des nervures de la seconde portion annulaire étant elle-même strictement inférieure à la hauteur moyenne des nervures de la troisième portion annulaire.

14. Pneumatique selon la revendication 13 **caractérisé en ce que** la première portion annulaire comprend majoritairement, et de préférence exclusivement, des nervures dont la hauteur est comprise entre 0,05 mm et 0,25 mm et dont la largeur est comprise entre 0,4 et 1,5 mm, et qui sont agencées selon un premier motif hexagonal (M31) se répétant selon un premier pas de répétition (P31) compris entre 2 mm et 15 mm, **en ce que** la seconde portion annulaire comprend majoritairement, et de préférence exclusivement, des nervures dont la hauteur est supérieure à la hauteur des nervures de la première portion annulaire et comprise entre 0,25 et 0,45 mm, dont la largeur est comprise entre 0,4 et 1,5 mm, et qui sont agencées selon un second motif (M32) hexagonal qui se répète selon un second pas de répétition (P32) compris entre 2 mm et 15 mm, de préférence égal au premier pas de répétition (P31), et **en ce que** la troisième portion annulaire comprend majoritairement, et de préférence exclusivement, des nervures dont la hauteur est supérieure à la hauteur des nervures de la seconde portion annulaire et comprise entre 0,45 mm et 1,2 mm, dont la largeur est comprise entre 0,4 mm et 2 mm, et qui sont agencées soit selon un troisième motif (M33) hexagonal qui se répète selon un troisième pas de répétition (P33) égal ou supérieur au second pas de répétition (P32) et compris entre 4 mm et 40 mm, voire préférentiellement entre 6 mm et 30 mm, soit selon un troisième motif (M33) de bandes rectilignes parallèles qui se répète selon un troisième pas de répétition (P33) strictement supérieur au second pas de répétition (P32) et compris entre 4 mm et 40 mm, voire préférentiellement entre 6 mm et 30 mm.

15. Membrane de cuisson (2) destinée à la fabrication d'un pneumatique (1) comprenant une zone sommet (11), une zone de bourrelet (13), et une zone de flanc (12), ladite membrane (2) présentant au repos une surface de contact (4) de forme cylindrique bombée qui s'étend autour et le long d'un axe central (Z) depuis un premier talon (24) formant un pôle nord, jusqu'à un second talon (25) formant un pôle sud, en passant par une ligne équatoriale (EQ_2) centrée sur l'axe central (Z) et comprise dans un plan équatorial (P_EQ) normal audit axe central, qui divise la surface de contact (4) en un hémisphère nord (4N) et un hémisphère sud (4S), ladite membrane de cuisson (2) étant pourvue d'une structure de drainage (30) qui comprend des chemins d'évacuation d'air creusés sur la surface de contact selon une profondeur égale ou supérieure à 0,05 mm, dits « canaux » (C31, C32, C33), dans laquelle au moins dans l'hémisphère nord (4N), et de préférence de façon symétrique dans l'hémisphère nord (4N) et dans l'hémisphère sud (4S), on peut définir un premier parallèle (P1), distinct de la ligne équatoriale (EQ_2) et correspondant à l'intersection de la surface de contact (4) avec un premier plan parallèle au plan équatorial (P_EQ), et un second parallèle (P2), qui est situé entre le premier parallèle (P1) et le talon (24) correspondant et qui correspond à l'intersection de la surface de contact (4) avec un second plan parallèle au plan équatorial (P_EQ), de telle sorte que la structure de drainage (30) comprend une première zone de drainage (31) correspondant à la portion de la surface de contact (4) délimitée par la ligne équatoriale (EQ_2) et le premier parallèle (P1), et dans laquelle les canaux (C31) présentent une première profondeur moyenne, une seconde zone de drainage (32), qui correspond à la portion de la surface de contact (4) délimitée par le premier parallèle (P1) et le second parallèle (P2), et dans laquelle les canaux (C32), qui communiquent avec les canaux (C31) de la première zone de drainage (31), présentent une seconde profondeur moyenne,
ladite membrane de cuisson (2) étant **caractérisée en ce que** ladite seconde profondeur moyenne est strictement supérieure à la première profondeur moyenne des canaux (C31) de la première zone de drainage (31), et **en ce que** la structure de drainage (30) comprend une troisième zone de drainage (33), qui correspond à la portion de la surface de contact (4) délimitée par le second parallèle (P2) et le talon (24) formant le pôle correspondant, et dans laquelle les canaux (C33), qui communiquent avec les canaux (C32) de la seconde zone de drainage (32), présentent une troisième profondeur moyenne, strictement supérieure à la seconde profondeur moyenne des canaux (C32) de la seconde zone de drainage (32).

## Patentansprüche

1. Verfahren zum Aushärten eines Reifens (1), bei dem eine Aushärtemembran (2) gegen einen Reifenrohling (3) ausgebreitet wird, um eine Kontaktfläche (4) der Aushärtemembran (2) in Anlage gegen eine Innenfläche (5) des Reifenrohlings (3) zu bringen und so eine Außenfläche (6) des Reifenrohlings gegen die Wände (21) einer Aushärteform (7) zu drücken, um einen Reifen (1) zu erhalten, mit einem Scheitelbereich (11), der einen ringförmigen Laufstreifen um eine Mittelachse (Z) bildet, und einem Wulstbereich (13) auf jeder Seite einer Äquatorialebene (P_EQ) senkrecht zur Mittelachse (Z), der die Befestigung des Reifens auf einer Felge ermöglicht, und einem Flankenbereich (12), der den Scheitelbereich (11) mit dem Wulstbereich (13) verbindet, wobei nach dem Verfahren die Kontaktfläche (4) der Aushärtemembran (2) mit einer Drainagestruktur (30) versehen ist, die Luftableitungswege (C31, C32, C33) umfasst, die auf der Kontaktfläche mit einer Tiefe von 0,05 mm oder mehr ausgehöhlt sind und als "Kanäle" (C31, C32, C33) bezeichnet werden, wobei die Drainagestruktur (30) zumindest auf einer Seite der Äquatorialebene (P_EQ) in mindestens drei Drainagebereiche (31, 32, 33) unterteilt ist, darunter ein erster Drainagebereich (31), der einem ersten ringförmigen Abschnitt der Kontaktfläche (4) entspricht, der auf der Mittelachse (Z) zentriert ist und entlang dessen sich die Kontaktfläche (4) an den Scheitelbereich (11) anpasst, ein zweiter Drainagebereich (32), der einem zweiten ringförmigen Abschnitt der Kontaktfläche (4) entspricht, der auf der Mittelachse (Z) zentriert ist und entlang dessen sich die Kontaktfläche (4) an den Flankenbereich (12) anpasst und dessen Kanäle (C32) mit den Kanälen (C31) des ersten Drainagebereichs (31) in Verbindung stehen, und einen dritten Drainagebereich (33), der einem dritten ringförmigen Abschnitt der Kontaktfläche (4) entspricht, der auf der Mittelachse (Z) zentriert ist, entlang dessen sich die Kontaktfläche (4) an den Wulstbereich (13) anpasst und dessen Kanäle (C33) mit den Kanälen (C32) des zweiten Drainagebereichs (32) in Verbindung stehen, wobei das Verfahren **dadurch gekennzeichnet ist, dass** die mittlere Tiefe der Kanäle (C33) des dritten Drainagebereichs (33), die gleich dem Quotienten des von den im Drainagebereich vorhandenen Kanälen eingenommenen Volumens durch die von denselben Kanälen über den Drainagebereich bedeckten Fläche ist, strikt größer als die mittlere Tiefe der Kanäle (C32) des zweiten Drainagebereichs (32) ist, wobei die mittlere Tiefe der Kanäle (C32) des zweiten Drainagebereichs (32) ihrerseits strikt größer als die mittlere Tiefe der Kanäle (C31) des ersten Drainagebereichs (31) ist.

2. Verfahren nach Anspruch 1, **dadurch gekennzeichnet, dass** die Grenze zwischen dem ersten Drainagebereich (31) und dem zweiten Drainagebereich (32) einer Linie folgt, die als "erste Parallele" (P1) bezeichnet wird und entlang derer die Senkrechte (N1) zur Innenfläche (5) des Reifens in Bezug auf die Mittelachse (Z) um einen Winkel (A1) geneigt ist, der als "erster Deklinationswinkel" bezeichnet wird und zwischen 40 Grad und 85 Grad, vorzugsweise zwischen 45 Grad und 85 Grad oder sogar zwischen 50 Grad und 80 Grad, beträgt.

3. Verfahren nach Anspruch 1 oder 2, **dadurch gekennzeichnet, dass** die Grenze zwischen dem zweiten Drainagebereich (32) und dem dritten Drainagebereich (33) einer Linie folgt, die als "zweite Parallele" (P2) bezeichnet wird und entlang derer die Senkrechte (N2) zur Innenfläche (5) des Reifens (1) in Bezug auf die Mittelachse (Z) einen Winkel (A2) bildet, der als "zweiter Deklinationswinkel" bezeichnet wird und zwischen null Grad und 30 Grad liegt.

4. Verfahren nach einem der vorangehenden Ansprüche, **dadurch gekennzeichnet, dass** die mittlere Tiefe der Kanäle (C31) im ersten Drainagebereich (31) zwischen 0,05 mm und 0,25 mm beträgt.

5. Verfahren nach einem der vorangehenden Ansprüche, **dadurch gekennzeichnet, dass** mindestens 50 %, vorzugsweise mindestens 80 % oder sogar 100 % der Kanäle (C31) des ersten Drainagebereichs (31) eine Tiefe (H31) aufweisen die zwischen 0,05 mm und 0,25 mm beträgt.

6. Verfahren nach einem der vorangehenden Ansprüche, **dadurch gekennzeichnet, dass** die mittlere Tiefe der Kanäle (C32) im zweiten Drainagebereich (32) zwischen 0,25 mm und 0,45 mm beträgt.

7. Verfahren nach einem der vorangehenden Ansprüche, **dadurch gekennzeichnet, dass** mindestens 50 %, vorzugsweise mindestens 80 % oder sogar 100 %, der Kanäle (C32) des zweiten Drainagebereichs (32) eine Tiefe (H32) aufweisen, die zwischen 0,25 mm und 0,45 mm beträgt.

8. Verfahren nach einem der vorangehenden Ansprüche, **dadurch gekennzeichnet, dass** die mittlere Tiefe der Kanäle (C33) im dritten Drainagebereich (33) zwischen 0,45 mm und 1,20 mm beträgt.

9. Verfahren nach einem der vorangehenden Ansprüche, **dadurch gekennzeichnet, dass** mindestens 50 %, vorzugsweise mindestens 80 % oder sogar 100% der Kanäle (C33) des dritten Drainagebereichs (33) eine Tiefe (H33) aufweisen, die zwischen 0,45 mm und 1,20 mm, vorzugsweise zwischen 0,45 mm und 0,60 mm, beträgt.

10. Verfahren nach einem der vorangehenden Ansprüche, **dadurch gekennzeichnet, dass** der erste Drainagebereich (31) eine erste Familie von Kanälen (C31) umfasst, die durch die Wiederholung eines ersten vorzugsweise hexagonalen Musters (M31) gebildet werden, das den Kanälen (C31) der ersten Familie eine Tiefe (H31) zwischen 0,05 mm und 0,25 mm, eine Breite (W31) zwischen 0,4 mm und 1,5 mm und einen ersten Wiederholungsabstand (P31) zwischen 2 mm und 15 mm verleiht.

11. Verfahren nach einem der vorangehenden Ansprüche, **dadurch gekennzeichnet, dass** der zweite Drainagebereich (32) eine zweite Familie von Kanälen (C32) umfasst, die durch die Wiederholung eines zweiten vorzugsweise hexagonalen Musters (M32) gebildet werden, das den Kanälen (C32) der zweiten Familie eine Tiefe (H32) zwischen 0,25 mm und 0,45 mm, eine Breite (W32) zwischen 0,4 mm und 1,5 mm und einen zweiten Wiederholungsabstand (P32) zwischen 2 mm und 15 mm verleiht.

12. Verfahren nach einem der vorangehenden Ansprüche, **dadurch gekennzeichnet, dass** der dritte Drainagebereich (33) eine dritte Familie von Kanälen (C33) umfasst, die durch die Wiederholung eines dritten Musters (M33), vorzugsweise aus geradlinigen parallelen Streifen, gebildet werden, die den Kanälen (C33) der dritten Familie eine Tiefe (H33) zwischen 0,45 mm und 1,20 mm, eine Breite (W33) zwischen 0,4 mm und 2 mm und einen Wiederholungsabstand (P33) zwischen 4 mm und 40 mm, vorzugsweise zwischen 6 mm und 30 mm, verleiht.

13. Reifen (1), der durch ein Verfahren nach einem der vorangehenden Ansprüche erhalten wird, wobei der Reifen somit auf seiner Innenfläche drei verschiedene ringförmige Abschnitte aufweist, die auf der Mittelachse (Z) des Reifens zentriert sind, die sich auf derselben Seite der Äquatorialebene (P_EQ) unter seinem Scheitelbereich (11), unter seinem Flankenbereich (12) bzw. unter seinem Wulstbereich (13) erstrecken und die Rippen mit einer Höhe von 0,05 mm oder mehr enthalten, die den jeweiligen Negativabdrücken der Kanäle (C31, C32, C33) des getrennten ersten, zweiten bzw. dritten Drainagebereichs (31, 32, 33) entsprechen und die so dimensioniert sind, dass der erste ringförmige Abschnitt eine mittlere Höhe der Rippen aufweist, die strikt kleiner als die mittlere Höhe der Rippen des zweiten ringförmigen Abschnitts ist, wobei die mittlere Höhe der Rippen des zweiten ringförmigen Abschnitts ihrerseits strikt kleiner als die mittlere Höhe der Rippen des dritten ringförmigen Abschnitts ist.

14. Reifen nach Anspruch 13, **dadurch gekennzeichnet, dass** der erste ringförmige Abschnitt hauptsächlich und vorzugsweise ausschließlich Rippen umfasst, deren Höhe zwischen 0,05 mm und 0,25 mm beträgt und deren Breite zwischen 0,4 mm und 1,5 mm beträgt und die in einem ersten hexagonalen Muster (M31) angeordnet sind, das sich gemäß einem ersten Wiederholungsabstand (P31) zwischen 2 mm und 15 mm wiederholt, dass der zweite ringförmige Abschnitt hauptsächlich und vorzugsweise ausschließlich Rippen umfasst, deren Höhe größer als die Höhe der Rippen des ersten ringförmigen Abschnitts ist und zwischen 0,25 mm und 0,45 mm beträgt, deren Breite zwischen 0,4 mm und 1,5 mm beträgt und die in einem zweiten hexagonalen Muster (M32) angeordnet sind, das sich gemäß einem zweiten Wiederholungsabstand (P32) zwischen 2 mm und 15 mm wiederholt, der vorzugsweise gleich dem ersten Wiederholungsabstand (P31) ist, und dass der dritte ringförmige Abschnitt hauptsächlich und vorzugsweise ausschließlich Rippen umfasst, deren Höhe größer als die Höhe der Rippen des zweiten ringförmigen Abschnitts ist und zwischen 0,45 mm und 1,2 mm beträgt, deren Breite zwischen 0,4 mm und 2 mm beträgt und die in einem dritten hexagonalen Muster (M33) angeordnet sind, das sich gemäß einem dritten Wiederholungsabstand (P33) wiederholt, der so groß wie oder größer als der zweite Wiederholungsabstand (P32) ist und zwischen 4 mm und 40 mm oder sogar vorzugsweise zwischen 6 mm und 30 mm beträgt, oder in einem dritten Muster (M33) aus geradlinigen parallelen Streifen, die sich gemäß einem dritten Wiederholungsabstand (P33) wiederholen, der strikt größer als der zweite Wiederholungsabstand (P32) ist und zwischen 4 mm und 40 mm oder sogar vorzugsweise zwischen 6 mm und 30 mm beträgt.

15. Aushärtemembran (2) für die Fertigung eines Reifens (1) mit einem Scheitelbereich (11), einem Wulstbereich (13) und einem Flankenbereich (12), wobei die Membran (2) im Ruhezustand eine Kontaktfläche (4) mit gewölbter zylindrischer Form aufweist, die sich um eine Mittelachse (Z) und entlang derselben von einem ersten Absatz (24), der einen Nordpol bildet, zu einem zweiten Absatz (25), der einen Südpol bildet, durch eine Äquatoriallinie (EQ_2) erstreckt, die auf der Mittelachse (Z) zentriert ist und in einer zur Mittelachse senkrechten Äquatorialebene (P_EQ) liegt, die die Kontaktfläche (4) in eine nördliche Hemisphäre (4N) und eine südliche Hemisphäre (4S) unterteilt, wobei die Aushärtemembran (2) mit einer Drainagestruktur (30) versehen ist, die Luftableitungswege umfasst, die auf der Kontaktfläche mit einer Tiefe von 0,05 mm oder mehr ausgehöhlt sind und als "Kanäle" (C31, C32, C33) bezeichnet werden,
wobei zumindest in der nördlichen Hemisphäre (4N) und vorzugsweise in symmetrischer Weise in der nördlichen Hemisphäre (4N) und in der südlichen Hemisphäre (4S) eine erste Parallele (P1) definiert werden kann, die sich von der Äquatoriallinie (EQ_2) unterscheidet und dem Schnittpunkt der Kontaktfläche (4) mit einer zur Äquatorialebene (P_EQ) parallelen ersten Ebene entspricht, und eine zweite Parallele (P2), die sich zwischen der ersten Parallele (P1) und dem entsprechenden Absatz (24) erstreckt und dem Schnittpunkt der Kontaktfläche (4) mit einer zur Äquatorialebene (P_EQ) parallelen zweiten Ebene entspricht, so dass die Drainagestruktur (30) Folgendes umfasst: einen ersten Drainagebereich (31), der dem Abschnitt der Kontaktfläche (4) entspricht, der durch die Äquatoriallinie (EQ_2) und die erste Parallele (P1) begrenzt ist, und in dem die Kanäle (C31) eine erste mittlere Tiefe aufweisen, und einen zweiten Drainagebereich (32), der dem Abschnitt der Kontaktfläche (4) entspricht, der durch die erste Parallele (P1) und die zweite Parallele (P2) begrenzt ist, und in dem die Kanäle (C32), die mit den Kanälen (C31) des ersten Drainagebereichs (31) in Verbindung stehen, eine zweite mittlere Tiefe aufweisen, wobei die Aushärtemembran (2) **dadurch gekennzeichnet ist, dass** die mittlere Tiefe strikt größer als die erste mittlere Tiefe der Kanäle (C31) des ersten Drainagebereichs (31) ist und dass die Drainagestruktur (30) einen dritten Drainagebereich (33) umfasst, der dem Abschnitt der Kontaktfläche (4) entspricht, der durch die zweite Parallele (P2) und den den entsprechenden Pol bildenden Absatz (24) begrenzt ist, und wobei die Kanäle (C33), die mit den Kanälen (C32) des zweiten Drainagebereichs (32) in Verbindung stehen, eine dritte mittlere Tiefe aufweisen, die strikt größer als die zweite mittlere Tiefe der Kanäle (C32) des zweiten Drainagebereichs (32) ist.

## Claims

1. Method for curing a tyre (1), during which a curing membrane (2) is deployed against a green tyre (3) in order to bring a contact surface (4) of said curing membrane (2) to bear against an interior surface (5) of said green tyre (3) and thus press an exterior surface (6) of said green tyre against the walls (21) of a curing mould (7) so as to obtain a tyre (1) which has a crown region (11) forming an annular tread around a central axis (Z), and, on each side of an equatorial plane (P_EQ) normal to said central axis (Z), a bead region (13) for securing said tyre to a rim, and a sidewall region (12) connecting the crown region (11) to the bead region (13), in which method the contact surface (4) of the curing membrane (2) is provided with a drainage structure (30) which comprises air-discharge paths (C31, C32, C33) cut into the contact surface to a depth equal to or greater than 0.05 mm and referred to as "channels" (C31, C32, C33), wherein said drainage structure (30) is subdivided, at least on one side of the equatorial plane (P_EQ), into at least three drainage regions (31, 32, 33), these being a first drainage region (31) which corresponds to a first annular portion of the contact surface (4), centred on the central axis (Z), along which said contact surface (4) will hug the crown region (11), a second drainage region (32) which corresponds to a second annular portion of the contact surface (4), centred on the central axis (Z), along which said contact surface (4) will hug the sidewall region (12) and the channels (C32) of which communicate with the channels (C31) of the first drainage region (31), and a third drainage region (33) which corresponds to a third annular portion of the contact surface (4), centred on the central axis (Z), along which said contact surface (4) will hug the bead region (13) and the channels (C33) of which communicate with the channels (C32) of the second drainage region (32), said method being **characterized in that** the mean depth of the channels (C33) of the third drainage region (33), which is equal to the quotient of the volume occupied by the channels present in said drainage region by the surface area covered by these same channels in said drainage region is strictly greater than the mean depth of the channels (C32) of the second drainage region (32), said mean depth of the channels (C32) of the second drainage region (32) being itself strictly greater than the mean depth of the channels (C31) of the first drainage region (31).

2. Method according to Claim 1, **characterized in that** the boundary between the first drainage region (31) and the second drainage region (32) follows a line referred to as the "first parallel" (P1) along which the normal (N1) to the interior surface (5) of the tyre is inclined, with respect to the central axis (Z), by an angle (A1) referred to as the "first declination angle" which is comprised between 40 degrees and 85 degrees, preferably between 45 degrees and 85 degrees, or even between 50 degrees and 80 degrees.

3. Method according to Claim 1 or 2, **characterized in that** the boundary between the second drainage region (32) and the third drainage region (33) follows a line referred to as the "second parallel" (P2) along which the normal (N2) to the interior surface (5) of the tyre (1) forms, with respect to the central axis (Z), an angle (A2) referred to as the "second declination angle" which is comprised between zero degrees and 30 degrees.

4. Method according to any one of the preceding claims, **characterized in that** the mean depth of the channels (C31) in the first drainage region (31) is comprised between 0.05 mm and 0.25 mm.

5. Method according to any one of the preceding claims, **characterized in that** at least 50%, preferably at least 80%, or even 100% of the channels (C31) of the first drainage region (31) have a depth (H31) which is comprised between 0.05 mm and 0.25 mm.

6. Method according to any one of the preceding claims, **characterized in that** the mean depth of the channels (C32) in the second drainage region (32) is comprised between 0.25 mm and 0.45 mm.

7. Method according to any one of the preceding claims, **characterized in that** at least 50%, preferably at least 80%, or even 100% of the channels (C32) of the second drainage region (32) have a depth (H32) which is comprised between 0.25 mm and 0.45 mm.

8. Method according to any one of the preceding claims, **characterized in that** the mean depth of the channels (C33) in the third drainage region (33) is comprised between 0.45 mm and 1.20 mm.

9. Method according to any one of the preceding claims, **characterized in that** at least 50%, preferably at least 80%, or even 100% of the channels (C33) of the third drainage region (33) have a depth (H33) which is comprised between 0.45 mm and 1.20 mm, preferably between 0.45 mm and 0.60 mm.

10. Method according to any one of the preceding claims, **characterized in that** the first drainage region (31) comprises a first family of channels (C31) which are formed by repeating a first, preferably hexagonal, pattern (M31) which gives the channels (C31) of said first family a depth (H31) comprised between 0.05 mm and 0.25 mm, a width (W31) comprised between 0.4 mm and 1.5 mm and a first repeat pitch (P31) comprised between 2 mm and 15 mm.

11. Method according to any one of the preceding claims, **characterized in that** the second drainage region (32) comprises a second family of channels (C32) which are formed by repeating a second, preferably hexagonal, pattern (M32) which gives the channels (C32) of said second family a depth (H32) comprised between 0.25 mm and 0.45 mm, a width (W32) comprised between 0.4 mm and 1.5 mm and a second repeat pitch (P32) comprised between 2 mm and 15 mm.

12. Method according to any one of the preceding claims, **characterized in that** the third drainage region (33) comprises a third family of channels (C33) which are formed by repeating a third pattern (M33), preferably in parallel straight bands, which gives the channels (C33) of said third family a depth (H33) comprised between 0.45 mm and 1.20 mm, a width (W33) comprised between 0.4 mm and 2 mm and a repeat pitch (P33) comprised between 4 mm and 40 mm, preferably between 6 mm and 30 mm.

13. Tyre (1) obtained by a method according to any one of the preceding claims, said tyre thus having on its interior surface three distinct annular portions, centred on the central axis (Z) of the tyre, which are situated, on the one same side of the equatorial plane (P_EQ), respectively beneath the crown region (11) thereof, beneath the sidewall region (12) thereof, and beneath the bead region (13) thereof, and which contain ribs of a height equal to or greater than 0.05 mm, which correspond to the respective impressions, in negative, of the channels (C31, C32, C33) of the distinct first, second and third drainage regions (31, 32, 33), and which are dimensioned in such a way that the first annular portion has a mean rib height strictly less than the mean height of the ribs of the second annular portion, said mean height of the ribs of the second annular portion being itself strictly less than the mean height of the ribs of the third annular portion.

14. Tyre according to Claim 13, **characterized in that** the first annular portion comprises, predominantly, and preferably exclusively, ribs the height of which is comprised between 0.05 mm and 0.25 mm, and the width of which is comprised between 0.4 and 1.5 mm, and which are arranged in a hexagonal first pattern (M31) that repeats with a first repeat pitch (P31) comprised between 2 mm and 15 mm, **in that** the second annular portion comprises, predominantly, and preferably exclusively, ribs the height of which is greater than the height of the ribs of the first annular portion and comprised between 0.25 mm and 0.45 mm, and the width of which is comprised between 0.4 and 1.5 mm, and which are arranged in a hexagonal second pattern (M32) that repeats with a second repeat pitch (P32) comprised between 2 mm and 15 mm, preferably equal to the first repeat pitch (P31), and **in that** the third annular portion comprises, predominantly, and preferably exclusively, ribs the height of which is greater than the height of the ribs of the second annular portion and comprised between 0.45 mm and 1.2 mm, and the width of which is comprised between 0.4 mm and 2 mm, and which are arranged either in a hexagonal third pattern (M33) that repeats with a third repeat pitch (P33) equal to or greater than the second repeat pitch (P32) and comprised between 4 mm and 40 mm, or else, preferably, between 6 mm and 30 mm, or in a third pattern (M33) of parallel straight bands which repeats at a third repeat pitch (P33) strictly greater than the second repeat pitch (P32) and comprised between 4 mm and 40 mm, or else preferably between 6 mm and 30 mm.

15. Curing membrane (2) intended for the manufacture of a tyre (1) comprising a crown region (11), a bead region (13), and a sidewall region (12), said membrane (2) having, at rest, a contact surface (4) of bulging cylindrical shape which extends about and along a central axis (Z) from a first foot (24) forming a north pole, as far as a second foot (25) forming a south pole, and passing via an equatorial line (EQ_2) centred on the central axis (Z) and comprised in an equatorial plane (P_EQ) normal to said central axis, which divides the contact surface (4) into a northern hemisphere (4N) and a southern hemisphere (4S), said curing membrane (2) being provided with a drainage structure (30) which comprises air-discharge paths cut into the contact surface to a depth equal to or greater than 0.05 mm and referred to as "channels" (C31, C32, C33), wherein, at least in the northern hemisphere (4N), and preferably symmetrically in the northern hemisphere (4N) and in the southern hemisphere (4S), there may be defined a first parallel (P1), distinct from the equatorial line (EQ_2) and corresponding to the intersection of the contact surface (4) with a first plane parallel to the equatorial plane (P_EQ), and a second parallel (P2) which is situated between the first parallel (P1) and the corresponding foot (24) and which corresponds to the intersection of the contact surface (4) with a second plane parallel to the equatorial plane (P_EQ) so that the drainage structure (30) comprises a first drainage region (31) corresponding to that portion of the contact surface (4) that is delimited by the equatorial line (EQ_2) and the first parallel (P1), and wherein the channels (C31) have a first mean depth, a second drainage region (32) which corresponds to that portion of the contact surface (4) that is delimited by the first parallel (P1) and the second parallel (P2), and wherein the channels (C32), which communicate with the channels (C31) of the first drainage region (31), have a second mean depth, said curing membrane (2) being **characterized in that** the second mean depth is strictly greater than the first mean depth of the channels (C31) of the first drainage region (31), and **in that** the drainage structure (30) comprises a third drainage region (33), which corresponds to that portion of the contact surface (4) that is delimited by the second parallel (P2) and the foot (24) that forms the corresponding pole, and wherein the channels (C33), which communicate with the channels (C32) of the second drainage region (32), have a third mean depth, strictly greater than the second mean depth of the channels (C32) of the second drainage region (32).
